(19) **Europäisches Patentamt / European Patent Office / Office européen des brevets**

(11) **EP 1 869 489 B1**

(12) **FASCICULE DE BREVET EUROPEEN**

(45) Date de publication et mention
de la délivrance du brevet:
**16.03.2011 Bulletin 2011/11**

(21) Numéro de dépôt: **06725498.7**

(22) Date de dépôt: **31.03.2006**

(51) Int Cl.:
*G01S 3/74* $^{(2006.01)}$    *G01S 3/48* $^{(2006.01)}$

(86) Numéro de dépôt international:
**PCT/EP2006/061252**

(87) Numéro de publication internationale:
**WO 2006/103292 (05.10.2006 Gazette 2006/40)**

(54) **PROCEDE ET DISPOSITIF DE GONIOMETRIE A HAUTE RESOLUTION A UN ORDRE PAIR ARBITRAIRE**

VERFAHREN UND EINRICHTUNG ZUR HOCHAUFLÖSENDEN RICHTUNGSFINDUNG WILLKÜRLICHER GERADER ORDNUNG

HIGH-RESOLUTION, ARBITRARY-EVEN-ORDER DIRECTION FINDING METHOD AND DEVICE

(84) Etats contractants désignés:
**DE FR GB**

(30) Priorité: **01.04.2005 FR 0503180**

(43) Date de publication de la demande:
**26.12.2007 Bulletin 2007/52**

(73) Titulaire: **THALES**
**92200 Neuilly sur Seine (FR)**

(72) Inventeurs:
 • **CHEVALIER, Pascal**
 **F-92400 Courbevoie (FR)**
 • **FERREOL, Anne**
 **F-92000 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-B1- 6 658 234**

 • **CHEVALIER P ET AL: "On the virtual array concept for the fourth-order direction finding problem" IEEE TRANSACTIONS ON SIGNAL PROCESSING IEEE USA, vol. 47, no. 9, septembre 1999 (1999-09), pages 2592-2595, XP002355398 ISSN: 1053-587X**
 • **ALBERA L ET AL: "Blind Identification of Overcomplete MixturEs of sources (BIOME)" LINEAR ALGEBRA AND ITS APPLICATIONS, ELSEVIER SCIENCE PUBLISHING CO., NEW YORK, NY, US, vol. 391, 1 novembre 2004 (2004-11-01), pages 3-30, XP004580007 ISSN: 0024-3795**
 • **DOGAN M C ET AL: "Interpretation of cumulants for array processing" CONFERENCE RECORD OF THE TWENTY-SEVENTH ASILOMAR CONFERENCE ON SIGNALS, SYSTEMS AND COMPUTERS (CAT. NO.93CH3312-6) IEEE COMPUT. SOC. PRESS LOS ALAMITOS, CA, USA, vol. 2, 1993, pages 1260-1264 vol., XP002355423 ISBN: 0-8186-4120-7**
 • **FERREOL A ET AL: "Second-order blind separation of first- and second-order cyclostationary sources-application to AM, FSK, CPFSK, and deterministic sources" IEEE TRANSACTIONS ON SIGNAL PROCESSING IEEE USA, vol. 52, no. 4, avril 2004 (2004-04), pages 845-861, XP002355273 ISSN: 1053-587X cité dans la demande**

EP 1 869 489 B1

**Description**

La présente invention concerne un procédé de goniométrie à haute résolution à un ordre pair arbitraire, c'est-à-dire exploitant exclusivement l'information contenue dans les statistiques d'ordre 2$q$ des observations, où $q$ est un entier tel que $q \geq 2$, de préférence q > 2, pour des réseaux à diversité d'espace, de diagramme et/ou de polarisation.

L'invention trouve notamment son application dans tous les systèmes qui nécessitent un degré de résolution spatiale important [(environnements à grand nombre d'émetteurs, réseau à faible nombre de capteurs, erreurs résiduelles de modèles (tarage, calibration..) importantes...)].

Au début des années 80, de nombreuses méthodes de goniométrie à l'ordre 2 dites à haute résolution (HR) [1] [14] ont été développées pour pallier les limitations des méthodes dites de super résolution [2-3] vis-à-vis des sources faibles. Parmi ces méthodes à HR, les méthodes dites à sous-espace telles que la méthode MUSIC (ou MUSIC-2) [14] sont les plus populaires. Ces méthodes à HR sont très performantes en contexte multi-sources dans la mesure où elles possèdent, en absence d'erreurs de modèle et pour un bruit de fond de cohérence spatiale connu, un pouvoir séparateur asymptotique illimité quel que soit le rapport signal sur bruit (Signal to Noise Ratio (SNR)) des sources. Toutefois, ces méthodes à HR souffrent de sérieux inconvénients. En effet, elles ne peuvent traiter qu'au plus, $N$ - 1 sources non cohérentes à partir d'un réseau à $N$ antennes et sont faiblement robustes aussi bien aux erreurs de modèle [10] [15], inhérentes aux mises en oeuvre opérationnelles, qu'à la présence d'un bruit de fond de cohérence spatiale inconnue [12], typique de la gamme HF par exemple. En outre, leurs performances peuvent devenir très affectées lorsqu'il s'agit de séparer plusieurs sources faibles et angulairement proches à partir d'un nombre limité d'échantillons observés.

A partir de la fin des années 80, principalement pour pallier les limitations précédentes, des méthodes de goniométrie à haute résolution à l'ordre 4 [13] ont été développées pour des sources non-Gaussiennes, omniprésentes en radiocommunications, parmi lesquelles l'extension de la méthode MUSIC à l'ordre 4 [13], appelée MUSIC-4, est la plus populaire. En effet, les méthodes à l'ordre 4 sont asymptotiquement robustes à la présence d'un bruit Gaussien de cohérence spatiale inconnue [13]. En outre, en dépit de leur variance supérieure, elles génèrent une augmentation virtuelle de l'ouverture du réseau et du nombre d'antennes, introduisant le concept de réseau virtuel (RV) à l'ordre 4 [4] [6] et offrant une résolution accrue et la possibilité de traiter un nombre de sources supérieur au nombre d'antennes. En particulier, à partir d'un réseau à $N$ antennes, la méthode MUSIC-4 peut traiter jusqu'à $N(N - 1) + 1$ sources lorsque les antennes sont identiques et jusqu'à $(N+ 1)(N - 1)$ sources pour des antennes différentes.

La publication de P.Chevalier et al intitulée « on the virtual array concept for the fourth-order direction finding problem » traite de la théorie des réseaux virtuels et son application à la goniométrie mais exclusivement à l'ordre 4. Le document de Albera et al intitulé « Blind Identification of overcomplete mixtures of sources » concerne l'identification autodidatce des vecteurs directeurs des sources à un ordre pair arbitraire 2q.

L'invention concerne un procédé de goniométrie à haute résolution à un ordre pair arbitraire, 2$q$ avec q > 2, pour un réseau comprenant N antennes à bande étroite recevant chacune la contribution de P sources caractérisé en ce que l'on exploite les propriétés algébriques d'une matrice de cumulants d'ordre 2q , $C_{2q,x}^{\circ}(l),$ dont les coefficients sont les cumulants circulaires d'ordre 2q, Cum$[x_{i1}(t),..., x_{iq}(t), x_{i\,q+1}(t)^*, ..., x_{i2q}(t)^*]$, des observations reçues sur chaque antenne (pour des rangements de cumulants indexés par $l$) afin de définir un sous-espace signal et un sous-espace bruit, et en ce qu'il comporte au moins les étapes suivantes :

- estimer $\hat{C}_{2q,x}(l),$ la matrice de cumulant d'ordre 2q, $C_{2q,x}(l)$, à partir de $L$ vecteurs échantillons $x(k)$, $1 \leq k \leq L$, en utilisant un estimateur des cumulants circulaires d'ordre 2$q$ des observations,

- décomposer en éléments propres la matrice estimée $\hat{C}_{2q,x}(l)$, et extraire une estimée, $\hat{U}_{2q,n}(l)$, de la matrice unitaire $U_{2q,n}(l)$ des vecteurs propres de $C_{2q,x}(l)$,

- calculer le pseudo-spectre estimé

$$\hat{P}_{Music\text{-}2q(l)}(\theta, \varphi) \triangleq$$

$$\frac{[a(\theta, \varphi)^{\otimes l} \otimes a(\theta, \varphi)^{*\otimes(q-l)}]^{\dagger} \, \hat{U}_{2q,n}(l) \, \hat{U}_{2q,n}(l)^{\dagger} \, [a(\theta, \varphi)^{\otimes l} \otimes a(\theta, \varphi)^{*\otimes(q-l)}]}{[a(\theta, \varphi)^{\otimes l} \otimes a(\theta, \varphi)^{*\otimes(q-l)}]^{\dagger} \, [a(\theta, \varphi)^{\otimes l} \otimes a(\theta, \varphi)^{*\otimes(q-l)}]}$$

pour un maillage donné de l'espace des directions ($\theta$, $\varphi$).

Selon une variante de réalisation, l'invention concerne un procédé de goniométrie à haute résolution à un ordre pair arbitraire, *2q* (*q* > 2), pour un réseau comprenant N antennes à bande étroite recevant chacune la contribution de P sources, caractérisé en ce que l'on exploite les propriétés algébriques d'une matrice de cumulant d'ordre 2q, $C_{2q,x}$ (*l*), dont les coefficients sont les cumulants circulaires d'ordre *2q*, $\text{Cum}[x_{i_1}(t),..., x_{i_q}(t), x_{i_{q+1}}(t)^*, ..., x_{i_{2q}}(t)^*]$, des observations reçues sur chaque antenne, pour des rangements de cumulants indexés par *l*, afin de définir un sous-espace signal et un sous-espace bruit et en ce que pour des réseaux à diversité de polarisation, il comporte au moins les étapes suivantes :

- estimer $\hat{C}_{2q,x}(l)$, la matrice de covariance $C_{2q,x}(l)$ à partir de *L* vecteurs échantillons *x(k)*, $1 \le k \le L$, en utilisant un estimateur des cumulants circulaires d'ordre *2q* des observations,
- décomposer en éléments propres la matrice estimée $\hat{C}_{2q,x}(l)$, et extraire une estimée, $\hat{U}_{2q,n}(l)$, de la matrice unitaire $U_{2q,n}(l)$ des vecteurs propres de $C_{2q,x}(l)$,
- calculer le pseudo-spectre estimé

$$\hat{P}_{2q\text{-}Music(l)}(\theta, \varphi) =$$

$$\lambda_{min}[(A_{12,q,l}(\theta, \varphi)^{\dagger} A_{12,q,l}(\theta, \varphi))^{-1} A_{12,q,l}(\theta, \varphi)^{\dagger} \hat{U}_{2q,n}(l) \hat{U}_{2q,n}(l)^{\dagger} A_{12,q,l}(\theta, \varphi)]$$

pour un maillage donné de l'espace des directions ($\theta$, $\varphi$), à partir d'une maîtrise des vecteurs directeurs $\boldsymbol{a}(\theta, \varphi, p1)$ et $\boldsymbol{a}(\theta, \varphi, p_2)$ dans les deux polarisations *p*1 et *p*2 et rechercher des minima locaux, où $A_{12}(\theta, \varphi)$ est la matrice (*N* x 2) définie par $A_{12}(\theta, \varphi) \triangleq [\boldsymbol{a}(\theta, \varphi, p_1), \boldsymbol{a}(\theta, \varphi, p_2)]$ et où $\lambda_{min}[X]$ correspond à la valeur propre minimale de la matrice X.

Selon un autre mode de réalisation, le procédé selon l'invention est un procédé de goniométrie à haute résolution à un ordre pair arbitraire, *2q* (*q* > 2), pour un réseau comprenant N antennes à bande étroite recevant chacune la contribution de P sources, caractérisé en ce que l'on exploite les propriétés algébriques d'une matrice de cumulants d'ordre 2q, $C_{2q,x}(l)$, dont les coefficients sont les cumulants circulaires d'ordre *2q*, $\text{Cum}[x_{i_1}(t),..., x_{i_q}(t), x_{i_{q+1}}(t)^*, ..., x_{i_{2q}}(t)^*]$, des observations reçues sur chaque antenne, pour des rangements de cumulants indexés par *l*, afin de définir un sous-espace signal et un sous-espace bruit pour des sources rectilignes, caractérisé en ce qu'il comporte au moins les étapes suivantes :

- estimer $\hat{C}_{2q,xe}(l)$, la matrice $C_{2q,xe}(l)$ de cumulants d'ordre 2q des observations étendues, $x_e(t) \triangleq [x(t)^{\mathsf{T}}, x(t)^{\dagger}]^{\mathsf{T}}$, où *x*(*t*) est le vecteur observation à partir de *L* vecteurs échantillons *x(k)*, $1 \le k \le L$, en utilisant un estimateur des cumulants d'ordre *2q* des observations,
- décomposer en éléments propres la matrice, $\hat{C}_{2q,xe}(l)$, et extraire une estimée, $\hat{U}_{2q,en}(l)$, de la matrice $U_{2q,en}(l)$ des vecteurs propres de l'espace bruit de la matrice $C_{2q,xe}(l)$,
- calculer le pseudo-spectre estimé

$$\hat{P}_{Music\text{-}2q\text{-}rec(l)}(\theta, \varphi, \phi) \triangleq$$

$$\frac{[a_e(\theta, \varphi, \phi)^{\otimes l} \otimes a_e(\theta, \varphi, \phi)^{*\otimes(q-l)}]^{\dagger} \hat{U}_{2q,en}(l) \hat{U}_{2q,en}(l)^{\dagger} [a_e(\theta, \varphi, \phi)^{\otimes l} \otimes a_e(\theta, \varphi, \phi)^{*\otimes(q-l)}]}{[a_e(\theta, \varphi, \phi)^{\otimes l} \otimes a_e(\theta, \varphi, \phi)^{*\otimes(q-l)}]^{\dagger} [a_e(\theta, \varphi, \phi)^{\otimes l} \otimes a_e(\theta, \varphi, \phi)^{*\otimes(q-l)}]}$$

pour un maillage donné de l'espace des directions ($\theta$, $\varphi$) et de l'espace des phases $\phi$ et rechercher des minima locaux.
L'invention concerne aussi un procédé de goniométrie à haute résolution à un ordre pair arbitraire, 2*q* avec q > 2, dans un réseau comprenant N antennes à bande étroite recevant chacune la contribution de P sources, caractérisé en ce qu'il comporte un processeur adapté à mettre en oeuvre les étapes du procédé présentant les étapes caractéristiques précitées.
Ce procédé présente notamment comme avantage d'augmenter virtuellement, par création d'antennes virtuelles, l'ouverture des réseaux d'antennes utilisés et donc d'augmenter la résolution, la capacité de traitement et la robustesse aux erreurs de modèles des techniques de goniométrie d'une manière croissante avec $q$.

Pour des sources rectilignes, le procédé selon l'invention permet la création d'antennes et d'ouverture virtuelles à partir de la matrice de tous les cumulants d'ordre 2q des observations, lequel permet le traitement d'un nombre de sources croissant avec q, à partir d'un réseau d'antennes donné.

D'autres caractéristiques et avantages de l'invention apparaîtront mieux à la lecture de la description d'un exemple de réalisation donnée à titre illustratif et nullement limitatif annexé des figures qui représentent :

- La figure 1 la représentation d'un signal incident en trois dimensions, et
- La figure 2 un réseau virtuel d'ordre 4 d'un réseau circulaire uniforme de 5 antennes avec l'ordre de multiplicité des antennes virtuelles.

Avant de détailler les étapes mises en oeuvre par le procédé, on rappelle quelques données utiles à la compréhension de l'invention.

On considère un réseau de $N$ antennes à bande étroite (BE), supposées identiques dans un premier temps, et on note $x(t)$ le vecteur des enveloppes complexes des signaux en sortie des antennes. Chaque antenne reçoit la contribution de $P$ sources centrées, stationnaires, à BE, statistiquement indépendantes ou non, et d'un bruit de fond. On suppose que les $P$ sources peuvent être regroupées en $G$ ensembles, avec $P_g$ sources dans l'ensemble $g$, tels qu'au sein d'un groupe, les sources sont supposées statistiquement dépendantes, alors que les sources appartenant à des ensembles différents sont supposées être statistiquement indépendantes. En particulier, $G = P$ correspond au cas où les $P$ sources sont statistiquement indépendantes alors que $G = 1$ correspond au cas où toutes les sources sont corrélées. Bien sûr, les paramètres $P_g$ sont tels que :

$$P \; = \; \sum_{g=1}^{G} \; P_g \qquad\qquad (1)$$

Sous ces hypothèses, le vecteur observation peut s'écrire approximativement

$$x(t) \; \approx \; \sum_{i=1}^{P} \; m_i(t)\, a(\theta_i, \varphi_i) \; + \; v(t) \; \triangleq \; A\, m(t) \; + \; v(t)$$

$$= \; \sum_{g=1}^{G} \; A_g\, m_g(t) \; + \; v(t) \; = \; \sum_{g=1}^{G} \; x_g(t) \; + \; v(t) \qquad (2)$$

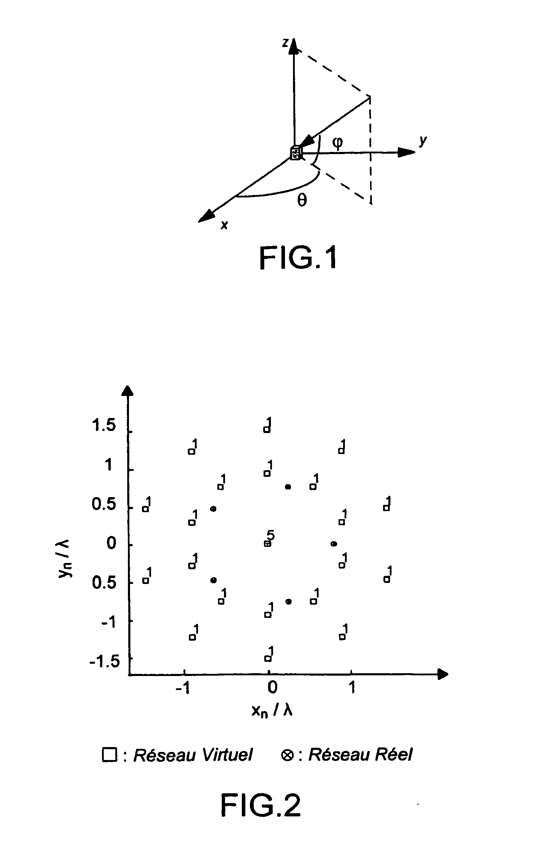

où $v(t)$ est le vecteur bruit, supposé centré et Gaussien, $m(t)$ est le vecteur dont les composantes $m_i(t)$ sont les enveloppes complexes des sources, $\theta_i$ et $\varphi_i$ sont les angles d'azimut et d'élévation de la source $i$ (Figure 1), $A$ est la matrice ($NxP$) des vecteurs directeurs des sources $a(\theta_i, \varphi_i)$ ($1 \le i \le P$), laquelle contient en particulier toute l'information relative aux directions d'arrivée des sources, $A_g$ est la sous-matrice ($N \times P_g$) de $A$ relative au gth groupe de sources, $mg(t)$ est le sous-vecteur ($P_g \times 1$) de $m(t)$ associé et $x_g(t) \triangleq A_g\, m_g(t)$. En particulier, en absence de couplage entre antennes, la composante $n$ du vecteur $a(\theta_i, \varphi_i)$, notée $a_n(\theta_i, \varphi_i)$, peut s'écrire, dans le cas d'un réseau qui n'exploite que la diversité d'espace, de la façon suivante [5]

$$a_n(\theta_i, \varphi_i) \; = \; \exp\{j2\pi[x_n \cos(\theta_i)\cos(\varphi_i) + y_n \sin(\theta_i)\cos(\varphi_i) + z_n \sin(\varphi_i)] / \lambda\}$$

$$(3)$$

où $\lambda$ est la longueur d'onde et ($x_n, y_n, z_n$) sont les coordonnées de l'antenne $n$.

Le procédé selon l'invention repose notamment sur l'idée suivante : la méthode MUSIC-2$q$ ($q \geq 1$) mise en oeuvre selon l'invention exploite l'information contenue dans la matrice de cumulants d'ordre 2$q$ ($N^q$x$N^q$), $C_{2q,x}$, dont les coefficients sont les cumulants circulaires d'ordre 2$q$ des observations, Cum$[x_{i_1}(t),..., x_{i_q}(t), x_{i_{q+1}}(t)^*, ..., x_{i_{2q}}(t)^*]$ ($1 \leq i_j \leq N$) ($1 \leq j \leq 2q$), où * correspond à la conjugaison complexe.

Ces coefficients peuvent être rangés dans la matrice $C_{2q,x}$ de différentes façons, laquelle détermine en particulier la résolution et la capacité de traitement de la méthode MUSIC-2$q$.

De manière à paramétrer ces rangements, on introduit un entier arbitraire $l$ tel que ($0 \leq l \leq q$) et on structure le 2$q$-uplet, ($i_1,.., i_q, i_{q+1},.., i_{2q}$), d'indices $i_j$ ($1 \leq j \leq 2q$) en 2 $q$-uplets indicés par $l$ et définis respectivement par ($i_1, i_2,...., i_l, i_{q+1},...., i_{2q-l}$) et ($i_{2q-l+1},..., i_{2q}, i_{l+1},....., i_q$). Lorsque les indices $i_j$ ($1 \leq j \leq 2q$) varient de 1 à $N$, les 2 $q$-uplets précédents prennent $N^q$ valeurs. Numérotant d'une manière naturelle les $N^q$ valeurs de chacun de ces 2 $q$-uplets par respectivement les entiers $I_l$ et $J_l$, tels que $1 \leq I_l, J_l \leq N^q$, on obtient :

$$I_l \triangleq \sum_{j=1}^{l} N^{q-j}(i_j - 1) + \sum_{j=1}^{q-l} N^{q-l-j}(i_{q+j} - 1) + 1 \qquad (4a)$$

$$J_l \triangleq \sum_{j=1}^{l} N^{q-j}(i_{2q-l+j} - 1) + \sum_{j=1}^{q-l} N^{q-l-j}(i_{l+j} - 1) + 1 \qquad (4b)$$

Utilisant la propriété d'invariance par permutation des cumulants, on déduit que Cum$[x_{i_1}(t),..., x_{i_q}(t), x_{i_{q+1}}(t)^*, ..., x_{i_{2q}}(t)^*]$ = Cum$[x_{i_1}(t),..., x_{i_l}(t), x_{i_{q+1}}(t)^*, ..., x_{i_{2q-l}}(t)^*, x_{i_{2q-l+1}}(t)^*,..., x_{i_{2q}}(t)^*, x_{i_{l+1}}(t),..., x_{i_q}(t)]$ et supposant que cette dernière quantité est l'élément $[I_l, J_l]$ de la matrice $C_{2q,x}$, alors notée $C_{2q,x}(l)$, il est facile de montrer en utilisant (2) que la matrice ($N^q$x$N^q$) $C_{2q,x}(l)$ peut s'écrire de la manière suivante :

$$C_{2q,x}(l) \approx \sum_{g=1}^{G} C_{2q,x_g}(l) + \eta_2 V \delta(q - 1) \qquad (5)$$

où $\eta_2$ est la puissance moyenne du bruit par antenne, $V$ est la matrice ($N$ x $N$) de cohérence spatiale du bruit telle que Tr$[V]$ = $N$, Tr$[.]$ signifie Trace, $\delta(.)$ est le symbole de Kronecker et la matrice ($N^q$x$N^q$) $C_{2q,x_g}(l)$ correspond à la matrice des cumulants circulaires d'ordre 2$q$ du vecteur $x_g(t)$ pour le rangement indexé par $l$, et s'écrit :

$$C_{2q,x_g}(l) = [A_g^{\otimes l} \otimes A_g^{*\otimes(q-l)}] C_{2q,m_g}(l) [A_g^{\otimes l} \otimes A_g^{*\otimes(q-l)}]^\dagger \qquad (6)$$

où $C_{2q,m_g}(l)$ est la matrice ($P_g^q$ x $P_g^q$) des cumulants circulaires d'ordre 2$q$ de $mg(t)$ pour le rangement indexé par $l$, $\dagger$ correspond à l'opération de transposition conjugaison, $\otimes$ est le produit de Kronecker et $A_g^{\otimes l}$ est la matrice ($N^l$x $P_g^l$) définie par $A_g^{\otimes l} \triangleq A_g \otimes A_g \otimes..... \otimes A_g$ avec un nombre de produits de Kronecker égal à $l$ - 1.

En particulier, pour $q$ = 1 et $l$ = 1, la matrice ($N$ x $N$) $C_{2q,x}(l)$ correspond à la matrice de covariance des observations (dans la mesure où les observations sont centrées) définie par

$$R_x \triangleq C_{2,x}(1) = E[x(t) x(t)^\dagger] \approx \sum_{g=1}^{G} A_g C_{2,m_g}(1) A_g^\dagger + \eta_2 V \qquad (7)$$

Pour $q$ = 2 et $l$ = 1, la matrice ($N^2$x$N^2$) $C_{2q,x}(l)$ correspond à la matrice de quadricovariance classique des observations, définie par

$$Q_x \triangleq C_{4,x}(1) \approx \sum_{g=1}^{G} [A_g \otimes A_g^*] C_{4,m_g}(1) [A_g \otimes A_g^*]^\dagger \qquad (8)$$

alors que pour $q = 2$ et $l = 2$, la matrice ($N^2 \times N^2$) $C_{2q,x}(l)$ correspond à une expression alternative de la matrice de quadricovariance des observations, définie par

$$\tilde{Q}_x \triangleq C_{4,x}(2) \approx \sum_{g=1}^{G} [A_g \otimes A_g] C_{4,m_g}(2) [A_g \otimes A_g]^\dagger \qquad (9)$$

*Estimation*

En pratique, les statistiques d'ordre 2q des observations, $Cum[x_{i_1}(t),..., x_{i_q}(t), x_{i_{q+1}}(t)^*, ..., x_{i_{2q}}(t)^*]$, sont inconnues a priori et doivent être estimées à partir de $L$ échantillons des observations, $x(k) \overset{\Delta}{=} x(kT_e)$, $1 \le k \le L$, où $T_e$ est la période d'échantillonnage.

Pour des observations centrées et stationnaires, utilisant la propriété d'ergodicité, un estimateur empirique des cumulants $Cum[x_{i_1}(t),..., x_{i_q}(t), x_{i_{q+1}}(t)^*, ..., x_{i_{2q}}(t)^*]$, non biaisé asymptotiquement et consistant, peut être construit à partir de la formule bien connue de Leonov-Shiryaev [11], donnant l'expression d'un cumulant d'ordre $n$ de $x(t)$ en fonction de ses moments d'ordre $p$ ($1 \le p \le n$), en remplaçant dans cette dernière tous les moments par leur estimée empirique. Plus précisément, la formule de Leonov-Shiryaev est donnée par :

$$Cum[x_{i_1}(t)^{\varepsilon 1}, x_{i_2}(t)^{\varepsilon 2},..., x_{i_n}(t)^{\varepsilon n}] =$$

$$\sum_{p=1}^{n} (-1)^{p-1} (p-1)! \, E[\prod_{j \in S1} x_{i_j}(t)^{\varepsilon j}] \, E[\prod_{j \in S2} x_{i_j}(t)^{\varepsilon j}] \, .. \, E[\prod_{j \in Sp} x_{i_j}(t)^{\varepsilon j}] \qquad (10)$$

où $(S1, S2,...., Sp)$ décrivent toutes les partitions en $p$ ensembles de $(1, 2,..., n)$, $\varepsilon j = \pm 1$ ($1 \le p \le n$) avec la convention $x^1 = x$ et $x^{-1} = x^*$ et une estimée empirique de (10) est obtenue en remplaçant dans (10) tous les moments $E[x_{i_1}(t)^{\varepsilon 1} x_{i_2}(t)^{\varepsilon 2}...x_{i_p}(t)^{\varepsilon p}]$ ($1 \le p \le n$) par leur estimée empirique donnée par :

$$\hat{E}[x_{i_1}(t)^{\varepsilon 1} x_{i_2}(t)^{\varepsilon 2}... x_{i_p}(t)^{\varepsilon p}](L) \triangleq \frac{1}{L} \sum_{k=1}^{L} x_{i_1}(k)^{\varepsilon 1} x_{i_2}(k)^{\varepsilon 2}...x_{i_p}(k)^{\varepsilon p} \qquad (11)$$

Cependant, en radiocommunications, la plupart des sources ne sont pas stationnaires mais sont cyclostationnaires (modulations numériques). Pour des observations centrées cyclostationnaires, la matrice de statistiques définie par (5) devient dépendante du temps, notée $C_{2q,x}(l)(t)$, et le procédé selon l'invention peut aussi être mis en oeuvre en considérant que $C_{2q,x}(l)$ est, dans ce cas, la moyenne temporelle, $< C_{2q,x}(l)(t) >$, sur un intervalle d'horizon infini, de la matrice de statistiques instantanées, $C_{2q,x}(l)(t)$. Dans ces conditions, utilisant la propriété de cyclo-ergodicité, la matrice $C_{2q,x}(l)$ doit être estimée à partir des observations par un estimateur non empirique tel que celui présenté dans [7] pour $q = 2$. Cette extension s'applique également à des sources cyclostationnaires non centrées telles que des sources modulées avec certaines modulations de fréquences [9], pourvu qu'un estimateur non empirique de statistiques, tel que celui présenté dans [9] pour $q = 1$ et dans [8] pour $q = 2$, soit utilisé.

Le procédé selon l'invention, ou méthode MUSIC-2q comporte différentes étapes et variantes de réalisation détaillés ci-après.

Les propriétés de la matrice de covariance d'ordre 2q, $C_{2q,x}(l)$ sont d'abord analysées et l'algorithme MUSIC-2q pour le rangement indexé par $l$ en est déduit.

Hypothèses

Pour développer l'algorithme MUSIC-2q pour le rangement indexé par $l$, plusieurs hypothèses présentées ci-après doivent être faites :

H1 : $P_g < N$, $1 \leq g \leq G$

H2 : la matrice $A_g^{\otimes l} \otimes A_g^{*\otimes(q-l)}$ est de rang plein $P_g^q$, $1 \leq g \leq G$

H3: $P(G, q) \triangleq \sum_{g=1}^{G} P_g^q < N^q$

H4 : la matrice $[A_1^{\otimes l} \otimes A_1^{*\otimes(q-l)}, \ldots, A_G^{\otimes l} \otimes AG^{*\otimes(q-l)}]$ est de rang plein $P(G, q)$.

En particulier, pour des sources statistiquement dépendantes ($G = 1$), les hypothèses H1 à H4 se réduisent à :

H1' : $P < N$

H2' : la matrice $A^{\otimes l} \otimes A^{*\otimes(q-l)}$ est de rang plein $P^q$

alors que pour des sources statistiquement indépendantes ($G = P$), les hypothèses H1 à H4 se réduisent à :

H1" : $P < N^q$
H2" : la matrice $[a_1^{\otimes l} \otimes a_1^{*\otimes(q-l)}, \ldots, a_P^{\otimes l} \otimes ap^{*\otimes(q-l)}]$ est de rang plein P

Propriétés de $C_{2q,x}(l)$

La matrice ($P_g^q$ x $P_g^q$) $C_{2q,mg}(l)$, qui contient les cumulants circulaires d'ordre 2q de $mg(t)$ pour le rangement indexé par $l$, est en général de rang plein, $P_g^q$, dans la mesure où les composantes de $m_g(t)$ sont statistiquement dépendantes. Dès lors, utilisant H1 et H2, la matrice $C_{2q,xg}(l)$ pour $q > 1$ a aussi le rang $P_g^q$. Dans ces conditions, on déduit de H4 que pour $q > 1$, le rang, $r_{2q,x}(l)$, de la matrice $C_{2q,x}(l)$ est égal à $P(G, q)$ et tel que $r_{2q,x}(l) < N^q$ d'après H3. En particulier, pour des sources qui sont toutes statistiquement dépendantes, $r_{2q,x}(l) = P^q$ alors que pour des sources statistiquement indépendantes, $r_{2q,x}(l) = P$. Dans la mesure où la matrice $C_{2q,x}(l)$ est Hermitienne, mais non définie positive, on déduit des résultats précédents que la matrice $C_{2q,x}(l)$ a $P(G, q)$ valeurs propres non nulles et $N^q - P(G, q)$ valeurs propres nulles.

L'algorithme MUSIC-2q

Pour construire un algorithme de type MUSIC à partir de la matrice $C_{2q,x}(l)$, pour q > 1, on calcule d'abord la décomposition en éléments propres de celle-ci, donnée par

$$C_{2q,x}(l) = U_{2q,s}(l) \Lambda_{2q,s}(l) U_{2q,s}(l)^{\dagger} + U_{2q,n}(l) \Lambda_{2q,n}(l) U_{2q,n}(l)^{\dagger} \qquad (12)$$

où $\Lambda_{2q,s}(l)$ est la matrice diagonale ($P(G, q)$ x $P(G, q)$) des valeurs propres non nulles de $C_{2q,x}(l)$, $U_{2q,s}(l)$ est la matrice unitaire ($N^q$ x $P(G, q)$) des vecteurs propres de $C_{2q,s}(l)$ associés aux $P(G, q)$ valeurs propres non nulles de $C_{2q,x}(l)$, $\Lambda_{2q,n}(l)$ est la matrice diagonale (($N^q - P(G, g)$) x ($N^q - P(G, q)$)) des valeurs propres nulles de $C_{2q,x}(l)$ et $U_{2q,n}(l)$ est la matrice unitaire ($N^q$ x ($N^q - P(G, q)$)) des vecteurs propres de $C_{2q,x}(l)$ associés aux ($N^q - P(G, q)$) valeurs propres nulles de $C_{2q,x}(l)$. Dans la mesure où $C_{2q,x}(l)$ est Hermitienne, toutes les colonnes de $U_{2q,s}(l)$ sont orthogonales à toutes les colonnes de $U_{2q,n}(l)$. En outre, dans la mesure où Span $\{U_{2q,s}(l)\}$ = Span $\{[A_1^{\otimes l} \otimes A_1^{*\otimes (q-l)}, \ldots, A_G^{\otimes l} \otimes A_G^{*\otimes(q-l)}]\}$, toutes les colonnes de toutes les matrices $A_g^{\otimes l} \otimes A_g^{*\otimes(q-l)}$, $1 \leq g \leq G$, sont orthogonales à toutes les colonnes de $U_{2q,n}(l)$.

Notons $(\theta_{ig}, \varphi_{ig})$ la direction d'arrivée de la source $i$ du groupe $g$. Dans ces conditions, le vecteur $a(\theta_{ig}, \varphi_{ig})^{\otimes l} \otimes a(\theta_{ig}, \varphi_{ig})^{*\otimes(q-l)}$ apparaît comme la colonne $[(1 - P_g^q)(i - 1)/(1 - P_g) + 1]$ de $A_g^{\otimes l} \otimes A_g^{*\otimes(q-l)}$. Dès lors, tous les vecteurs $\{a(\theta_{ig}, \varphi_{ig})^{\otimes l} \otimes a(\theta_{ig}, \varphi_{ig})^{*\otimes(q-l)}, 1 \le i \le P_g, 1 \le g \le G\}$ sont orthogonaux aux colonnes de $U_{2q,n}(l)$ et sont les seules solutions de l'équation suivante :

$$[a(\theta, \varphi)^{\otimes l} \otimes a(\theta, \varphi)^{*\otimes(q-l)}]^{\dagger} \, U_{2q,n}(l) \, U_{2q,n}(l)^{\dagger} \, [a(\theta, \varphi)^{\otimes l} \otimes a(\theta, \varphi)^{*\otimes(q-l)}] = 0 \tag{13}$$

laquelle correspond au coeur de l'algorithme MUSIC-2$q$ pour le rangement indexé par $l$. En pratique, la matrice $U_{2q,s}(l)$ doit être estimée à partir des observations et les directions d'arrivée des sources doivent être estimées en cherchant les minima du membre gauche de l'équation (13). Dans la mesure où, pour des réseaux à diversité d'espace, la norme du vecteur $[a(\theta, \varphi)^{\otimes l} \otimes a(\theta, \varphi)^{*\otimes(q-l)}]$ est indépendante de la direction d'arrivée, le premier membre de gauche de l'équation (13) peut être normalisé par le terme $[a(\theta, \varphi)^{\otimes l} \otimes a(\theta, \varphi)^{*\otimes(q-l)}]^{\dagger} \, [a(\theta, \varphi)^{\otimes l} \otimes a(\theta, \varphi)^{*\otimes(q-l)}]$ sans changer les résultats de l'algorithme.

Les différentes étapes de l'algorithme MUSIC-2$q$ pour le rangement indexé par $l$ sont résumées ci-après :

1. Estimation, $\hat{C}_{2q,x}(l)$, de la matrice $C_{2q,x}(l)$ à partir de $L$ vecteurs échantillons $x(k)$, $1 \le k \le L$, en utilisant un estimateur adéquat des cumulants circulaires d'ordre $2q$ des observations,

2. Décomposition en éléments propres de la matrice, $\hat{C}_{2q,x}(l)$, et extraction d'une estimée, $\hat{U}_{2q,n}(l)$, de la matrice $U_{2q,n}(l)$. Cette étape peut nécessiter une estimation de rang dans le cas où le nombre de sources et/ou leur degré de dépendance statistique est inconnu a priori.

3. Calcul du pseudo-spectre estimé

$$\hat{P}_{Music\text{-}2q(l)}(\theta, \varphi) \triangleq$$

$$\frac{[a(\theta, \varphi)^{\otimes l} \otimes a(\theta, \varphi)^{*\otimes(q-l)}]^{\dagger} \, \hat{U}_{2q,n}(l) \, \hat{U}_{2q,n}(l)^{\dagger} \, [a(\theta, \varphi)^{\otimes l} \otimes a(\theta, \varphi)^{*\otimes(q-l)}]}{[a(\theta, \varphi)^{\otimes l} \otimes a(\theta, \varphi)^{*\otimes(q-l)}]^{\dagger} \, [a(\theta, \varphi)^{\otimes l} \otimes a(\theta, \varphi)^{*\otimes(q-l)}]} \tag{14}$$

pour un maillage donné de l'espace et recherche des minima locaux. La recherche des minimas inclus par exemple une interpolation locale autour de chacun des minima locaux.

Dans certains cas, le nombre de sources $P$ est connu, tel que $P < N$, mais leur degré de dépendance statistique n'est pas connu. Dans ces conditions, $P(G, q) \le P^q$ et une approche conservatrice pour construire $\hat{U}_{2q,n}(l)$ est d'utiliser seulement les $(N^q - P^q)$ vecteurs propres de $\hat{C}_{2q,x}(l)$ associés aux plus petites valeurs propres, ce qui revient implicitement à supposer toutes les sources statistiquement dépendantes.

Les étapes du procédé selon l'invention détaillées précédemment pour des sources non-Gaussiennes quelconques et des réseaux à diversité d'espace, peuvent aussi être appliquées au cas de réseaux à diversité d'espace, de diagramme et/ou de polarisation ainsi qu'au cas où les sources possèdent une propriété de rectilinéarité connue a priori et exploitée dans l'algorithme.

Réseaux à diversité d'espace, de diagramme et/ou de polarisation

Dans le cas général d'un réseau comportant des antennes différentes, c'est-à-dire d'un réseau à diversité de diagramme et /ou de polarisation en plus ou à la place de la diversité d'espace, le vecteur directeur de la source $i$ dépend non seulement de la direction d'arrivée, $(\theta_i, \varphi_i)$, de la source $i$ mais aussi de sa polarisation, $p_i$, où $p_i$ est un couple de paramètres correspondant aux angles de polarisation de la source $i$ dans le plan d'onde. Dans ces conditions, le vecteur directeur de la source $i$, noté $a(\theta_i, \varphi_i, p_i)$, a une composante n donnée par [5]

$$a_n(\theta_i, \varphi_i, p_i) = f_n(\theta_i, \varphi_i, p_i) \exp\{j2\pi[x_n \cos(\theta_i) \cos(\varphi_i) + y_n \sin(\theta_i) \cos(\varphi_i) + z_n \sin(\varphi_i)] / \lambda\} \tag{15}$$

où $f_n(\theta_i, \varphi_i, p_i)$ est la réponse complexe de l'antenne n à un champ électrique provenant de la direction $(\theta_i, \varphi_i)$ et ayant l'état de polarisation $p_i$.

Sous ces hypothèses, l'algorithme MUSIC-2$q$ décrit au paragraphe précédent s'applique de la même manière aux réseaux exploitant la diversité de diagramme et de polarisation, mais avec un pseudo-spectre estimé dépendant du paramètre polarisation $p$ et donné par :

$$\hat{P}_{Music\text{-}2q(l)}(\theta, \varphi, p) \triangleq \qquad (16)$$

$$\frac{[a(\theta, \varphi, p)^{\otimes l} \otimes a(\theta, \varphi, p)^{*\otimes(q-l)}]^{\dagger} \hat{U}_{2q,n}(l)\, \hat{U}_{2q,n}(l)^{\dagger} [a(\theta, \varphi, p)^{\otimes l} \otimes a(\theta, \varphi, p)^{*\otimes(q-l)}]}{[a(\theta, \varphi, p)^{\otimes l} \otimes a(\theta, \varphi, p)^{*\otimes(q-l)}]^{\dagger} [a(\theta, \varphi, p)^{\otimes l} \otimes a(\theta, \varphi, p)^{*\otimes(q-l)}]}$$

Dans le cas d'un réseau exploitant les diversités de diagramme et de polarisation, on effectue la normalisation du pseudo-spectre par le terme

$$[a(\theta, \varphi, p)^{\otimes l} \otimes a(\theta, \varphi, p)^{*\otimes(q-l)}]^{\dagger}\, [a(\theta, \varphi, p)^{\otimes l} \otimes a(\theta, \varphi, p)^{*\otimes(q-l)}]$$

de manière à rendre le pseudo-spectre constant par rapport aux directions en absence de sources.

Dès lors, sous l'hypothèse d'une maîtrise des réponses des antennes en direction et en polarisation (par exemple par calibration du réseau en direction et en polarisation), la recherche des minimas du pseudo-spectre, $\hat{P}_{2q\text{-}Music(l)}(\theta, \varphi, p)$, demande un maillage non seulement de l'espace des directions $(\theta, \varphi)$ mais aussi de l'espace des polarisations p, suivi d'une interpolation aux voisinages des minimas, ce qui représente un coût considérable. Une manière de s'affranchir du maillage de l'espace des polarisations est d'exploiter le fait qu'une onde de polarisation $p$ peut se décomposer en la somme pondérée de deux ondes à polarisations, $p_1$ et $p_2$, orthogonales. Dans ces conditions, le vecteur directeur $a(\theta, \varphi, p)$ devient une combinaison linéaire des vecteurs directeurs $a(\theta, \varphi, p_1)$ et $a(\theta, \varphi, p_2)$ relatifs à ces deux polarisations telle que :

$$a(\theta, \varphi, p) = \alpha_1\, a(\theta, \varphi, p_1) + \alpha_2\, a(\theta, \varphi, p_2) = A_{12}(\theta, \varphi)\, \alpha(p) \qquad (17)$$

où $\alpha_1$ et $\alpha_2$, tels que $\alpha_1^2 + \alpha_2^2 = 1$, sont les coefficients réels de la décomposition du champ incident en somme de deux champs polarisés orthogonalement, $\alpha(p)$ est le vecteur (2 x 1) de composantes $\alpha_1$ et $\alpha_2$ et $A_{12}(\theta, \varphi)$ est la matrice ($N$ x 2) définie par $A_{12}(\theta, \varphi) \triangleq [\, a(\theta, \varphi, p_1),\, a(\theta, \varphi, p_2)]$.

Utilisant le fait que $(X\,Y) \otimes (Z\,W) = (X{\otimes}Z)\,(Y{\otimes}W)$, on déduit de (17) que

$$a(\theta, \varphi, p)^{\otimes l} \otimes a(\theta, \varphi, p)^{*\otimes(q-l)} = [A_{12}(\theta, \varphi)^{\otimes l} \otimes A_{12}(\theta, \varphi)^{*\otimes(q-l)}][\alpha(p)^{\otimes l} \otimes \alpha(p)^{*\otimes(q-l)}]$$

$$\triangleq A_{12,q,l}(\theta, \varphi)\, \alpha_{q,l}(p) \qquad (18)$$

où $A_{12,q,l}(\theta, \varphi)$ est la matrice ($N^q$ x $2^q$) définie par $A_{12,q,l}(\theta, \varphi) \triangleq [A_{12}(\theta, \varphi)^{\otimes l} \otimes A_{12}(\theta, \varphi)^{*\otimes(q-l)}]$ et où $\alpha_{q,l}(p)$ est le vecteur ($2^q$ x 1) défini par $\alpha_{q,l}(p) \triangleq [\alpha(p)^{\otimes l} \otimes \alpha(p)^{*\otimes(q-l)}]$. Dans ces conditions, le pseudo-spectre (16) prend la forme :

$$\hat{P}_{Music\text{-}2q(l)}(\theta, \varphi, p) \triangleq$$

$$\frac{\alpha_{q,l}(p)^{\dagger} A_{12,q,l}(\theta, \varphi)^{\dagger} \hat{U}_{2q,n}(l) \hat{U}_{2q,n}(l)^{\dagger} A_{12,q,l}(\theta, \varphi) \alpha_{q,l}(p)}{\alpha_{q,l}(p)^{\dagger} A_{12,q,l}(\theta, \varphi)^{\dagger} A_{12,q,l}(\theta, \varphi) \alpha_{q,l}(p)} \qquad (19)$$

et l'utilisation dans (19) du vecteur $\alpha_{q,l}(p)$ qui minimise (19) aboutit à un pseudo-spectre ne dépendant plus que de la direction d'arrivée et donné par :

$$\hat{P}_{2q\text{-}Music(l)}(\theta, \varphi) =$$

$$\lambda_{min}[(A_{12,q,l}(\theta, \varphi)^{\dagger} A_{12,q,l}(\theta, \varphi))^{-1} A_{12,q,l}(\theta, \varphi)^{\dagger} \hat{U}_{2q,n}(l) \hat{U}_{2q,n}(l)^{\dagger} A_{12,q,l}(\theta, \varphi)] \qquad (20)$$

où $\lambda_{min}[X]$ correspond à la valeur propre minimale de la matrice X. Les directions estimées des sources, $(\hat{\theta}_i, \hat{\varphi}_i)$ ($1 \le i \le P$), correspondent aux mimima locaux de (20), lesquels sont à rechercher à partir d'une maîtrise des vecteurs directeurs $a(\theta, \varphi, p_1)$ et $a(\theta, \varphi, p_2)$ dans les deux polarisations $p_1$ et $p_2$ (par calibration par exemple), d'un maillage de l'espace des directions d'arrivée suivi d'une interpolation autour des minimas.

Une estimation, $\hat{\alpha}_{q,l}(p_i)$, du vecteur $\alpha_{q,l}(p_i)$ associé à la source $i$ est alors donnée par le vecteur propre de la matrice $(A_{12,q,l}(\theta_i, \hat{\varphi}_i)^{\dagger} A_{12,q,l}(\theta_i, \hat{\varphi}_i))^{-1} A_{12,q,l}(\theta_i, \hat{\varphi}_i)^{\dagger} \hat{U}_{2q,n}(l) \hat{U}_{2q,n}(l)^{\dagger} A_{12,q,l}(\theta_i, \hat{\varphi}_i)$ associé à la valeur propre minimale. En décomposant le vecteur $\hat{\alpha}_{q,l}(p_i)$ en $2^{q-2}$ sous-vecteurs (4 x 1), $\hat{\alpha}_{q,l,s}(p_i)$, $1 \le s \le q - 2$, on obtient $\hat{\alpha}_{q,l}(p_i) = [\hat{\alpha}_{q,l,1}(p_i)^{T}, \ldots, \hat{\alpha}_{q,l,(q-2)}(p_i)^{T}]^{T}$. Il est alors aisé de vérifier que le sous-vecteur $\hat{\alpha}_{q,l,s}(p_i)$ est une estimée du vecteur $\alpha_{q,l,s}(p_i)$, lequel est proportionnel à :

$$\alpha(p_i) \otimes \alpha(p_i) \text{ si } q - l = 0 \qquad (21a)$$

$$\alpha(p_i) \otimes \alpha(p_i)^{*} \text{ si } q - l = 1 \qquad (21b)$$

$$\alpha(p_i)^{*} \otimes \alpha(p_i)^{*} \text{ si } q - l > 1 \qquad (21c)$$

Dans ces conditions, en rangeant les composantes du vecteur $\hat{\alpha}_{q,l,s}(p_i)$ dans une matrice (2 x 2) $\hat{\Gamma}_{q,l,s}(p_i)$ telle que $\hat{\Gamma}_{q,l,s}(p_i)[k,j] = \hat{\alpha}_{q,l,s}(p_i)[2(k-1)+j]$, où $\hat{\Gamma}_{q,l,s}(p_i)[k,j]$ et $\hat{\alpha}_{q,l,s}(p_i)[k]$ sont l'élément $[k,j]$ et la composante $k$ respectivement de la matrice $\hat{\Gamma}_{q,l,s}(p_i)$ et du vecteur $\hat{\alpha}_{q,l,s}(p_i)$, la matrice $\hat{\Gamma}_{q,l,s}(p_i)$ devient, à un scalaire près, une estimée de la matrice $\Gamma_{q,l,s}(p_i)$ définie par :

$$\Gamma_{q,l,s}(p_i) = \alpha(p_i) \alpha(p_i)^{T} \text{ si } q - l = 0 \qquad (22a)$$

$$\Gamma_{q,l,s}(p_i) = \alpha(p_i) \alpha(p_i)^{\dagger} \text{ si } q - l = 1 \qquad (22b)$$

$$\Gamma_{q,l,s}(p_i) = \alpha(p_i)^{*} \alpha(p_i)^{\dagger} \text{ si } q - l > 1 \qquad (22c)$$

Il suffit alors de diagonaliser conjointement les matrices $\Delta_{q,l,s}(p_i)$, $1 \le s \le q - 2$, pour obtenir une estimée, $\hat{\alpha}(p_i)$, de $\alpha(p_i)$, laquelle correspond au vecteur propre associé à la valeur propre maximale, où $\hat{\Delta}_{q,l,s}(p_i)$ est définie par :

$$\hat{\Delta}_{q,l,s}(p_i) = \hat{\Gamma}_{q,l,s}(p_i)\, \hat{\Gamma}_{q,l,s}(p_i)^{\dagger} \text{ si } q - l = 0 \tag{23a}$$

$$\hat{\Delta}_{q,l,s}(p_i) = \hat{\Gamma}_{q,l,s}(p_i)\, \hat{\Gamma}_{q,l,s}(p_i)^{\dagger} \text{ si } q - l = 1 \tag{23b}$$

$$\hat{\Delta}_{q,l,s}(p_i) = \hat{\Gamma}_{q,l,s}(p_i)^{*}\, \hat{\Gamma}_{q,l,s}(p_i)^{T} \text{ si } q - l > 1 \tag{23c}$$

Cas des Sources rectilignes

Pour des observations non circulaires à l'ordre $2q$, on exploite la matrice ($2^q N^q$ x $2^q N^q$), $C_{2q,xe}$, de cumulants d'ordre $2q$ du vecteur observation étendu ($2N$ x 1) $x_e(t) \stackrel{\Delta}{=} [x(t)^T, x(t)^\dagger]^T$, dont les coefficients sont les cumulants circulaires d'ordre $2q$ du vecteur $x_e(t)$, $Cum[x_{ei_1}(t),..., x_{ei_q}(t), x_{ei_{q+1}}(t)^*, ..., x_{ei_{2q}}(t)^*]$ ($1 \le i_j \le 2N$) ($1 \le j \le 2q$). Ces cumulants d'ordre $2q$ peuvent être rangés de différentes façons, indexées par l'entier $l$, dans la matrice $C_{2q,xe}$, laquelle est notée, pour le rangement indexé par $l$, $C_{2q,xe}(l)$.

Un famille particulière de sources non circulaires à l'ordre $2q$ correspond aux sources rectilignes, caractérisées par le fait que leur enveloppe complexe est réelle, ce qui est en particulier le cas pour des sources modulées en amplitude (AM, ASK) ou en phase à 2 états (BPSK). Pour $P$ sources toutes rectilignes, sous les hypothèses énoncées précédemment, on déduit de (2) l'expression du vecteur $x_e(t)$ donnée par :

$$
\begin{aligned}
x_e(t) &\approx \sum_{i=1}^{P} m_i(t)\, a_e(\theta_i, \varphi_i, \phi_i) \;+\; v_e(t) \;\stackrel{\Delta}{=}\; A_e\, m(t) \;+\; v_e(t) \\
&= \sum_{g=1}^{G} A_{eg}\, m_g(t) \;+\; v_e(t) \;=\; \sum_{g=1}^{G} x_{eg}(t) \;+\; v_e(t)
\end{aligned}
\tag{24}
$$

où $v_e(t) \stackrel{\Delta}{=} [v(t)^T, v(t)^\dagger]^T$, $a_e(\theta_i, \varphi_i, \phi_i) \stackrel{\Delta}{=} [e^{j\phi_i} a(\theta_i, \varphi_i)^T, e^{-j\phi_i} a(\theta_i, \varphi_i)^\dagger]^T$, $\phi_i$ est la phase du canal de propagation associé à la source $i$, $A_e$ est la matrice ($2N$x$P$) des vecteurs $a_e(\theta_i, \varphi_i, \phi_i)$ ($1 \le i \le P$), $A_{eg}$ est la sous-matrice ($2N$ x $P_g$) de $A_e$ relative au gth groupe de sources et $x_{eg}(t) \stackrel{\Delta}{=} A_{eg}\, m_g(t)$. Le modèle (24) est similaire au modèle (2), dans lequel les vecteurs directeurs étendus ($2N$ x 1), $a_e(\theta_i, \varphi_i, \phi_i)$, ont remplacé les vecteurs directeurs ($N$ x 1), $a(\theta_i, \varphi_i)$. Dans ce contexte, sous les conditions C1 à C4 présentées ci-après :

C1 : $P_g < 2N$, $1 \le g \le G$
C2 : la matrice $A_{eg}^{\otimes l} \otimes A_{eg}^{*\otimes(q-l)}$ est de rang plein $P_g^q$, $1 \le g \le G$

$$\text{C3 : } P(G, q) \stackrel{\Delta}{=} \sum_{g=1}^{G} P_g^q < 2^q N^q$$

C4 : la matrice $[A_{e1}^{\otimes l} \otimes A_{e1}^{*\otimes(q-l)}, ....., A_{eG}^{\otimes l} \otimes A_{eG}^{*\otimes(q-l)}]$ est de rang plein $P(G, q)$ et en utilisant un raisonnement similaire à celui exposé ci-avant sur les propriétés de la matrice et l'algorithme Music-$2q$, mais à partir de la matrice $C_{2q,xe}(l)$, on aboutit à l'algorithme MUSIC-$2q$ pour sources rectilignes, noté MUSIC-$2q$-REC, et pour le rangement indexé par $l$, dont les étapes sont résumées ci-après :

1. Estimation, $\hat{C}_{2q,xe}(l)$, de la matrice $C_{2q,xe}(l)$ à partir de $L$ vecteurs échantillons $x(k)$, $1 \le k \le L$, en utilisant un estimateur adéquat des cumulants circulaires d'ordre $2q$ des observations.

2. Décomposition en éléments propres de la matrice, $\hat{C}_{2q,xe}(l)$, et extraction d'une estimée, $\hat{U}_{2q,en}(l)$, de la matrice $U_{2q,en}(l)$ des vecteurs propres de l'espace bruit de la matrice $C_{2q,xe}(l)$. Cette étape peut nécessiter une estimation de rang dans le cas où le nombre de sources et/ou leur degré de dépendance statistique est inconnu a priori.

3. Calcul du pseudo-spectre estimé

$$\hat{P}_{Music\text{-}2q\text{-}rec(l)}(\theta, \varphi, \phi) \triangleq$$

$$\frac{[a_e(\theta, \varphi, \phi)^{\otimes l} \otimes a_e(\theta, \varphi, \phi)^{*\otimes(q-l)}]^{\dagger} \hat{U}_{2q,en}(l) \hat{U}_{2q,en}(l)^{\dagger} [a_e(\theta, \varphi, \phi)^{\otimes l} \otimes a_e(\theta, \varphi, \phi)^{*\otimes(q-l)}]}{[a_e(\theta, \varphi, \phi)^{\otimes l} \otimes a_e(\theta, \varphi, \phi)^{*\otimes(q-l)}]^{\dagger} [a_e(\theta, \varphi, \phi)^{\otimes l} \otimes a_e(\theta, \varphi, \phi)^{*\otimes(q-l)}]}$$

$$(25)$$

pour un maillage donné de l'espace des directions $(\theta, \varphi)$ et de l'espace des phases $\phi$ et recherche des minima locaux (incluant une interpolation locale autour de chacun des minima locaux).

Selon une variante de réalisation, une manière de s'affranchir du maillage de l'espace des phases, est d'exploiter le fait que le vecteur directeur étendu $a_e(\theta, \varphi, \phi)$ peut s'écrire :

$$a_e(\theta, \varphi, \phi) = \tilde{A}_e(\theta, \varphi) \beta(\phi) \qquad (26)$$

où $\beta(\phi)$ est le vecteur (2 x 1) défini par $\beta(\phi) \triangleq [e^{j\phi}, e^{-j\phi}]^T$ et $\tilde{A}_e(\theta, \varphi)$ est la matrice ($2N$ x 2) définie par

$$\tilde{A}_e(\theta, \varphi) \triangleq \begin{pmatrix} a(\theta, \varphi) & 0 \\ 0 & a(\theta, \varphi)^* \end{pmatrix} \qquad (27)$$

où 0 est le vecteur nul de dimension ($N$ x 1). Utilisant le fait que $(X\,Y) \otimes (Z\,W) = (X \otimes Z)(Y \otimes W)$, on déduit de (26) que :

$$a_e(\theta, \varphi, \phi)^{\otimes l} \otimes a_e(\theta, \varphi, \phi)^{*\otimes(q-l)} =$$

$$[\tilde{A}_e(\theta, \varphi)^{\otimes l} \otimes \tilde{A}_e(\theta, \varphi)^{*\otimes(q-l)}][\beta(\phi)^{\otimes l} \otimes \beta(\phi)^{*\otimes(q-l)}] \triangleq \tilde{A}_{e,q,l}(\theta, \varphi) \beta_{q,l}(\phi) \quad (28)$$

où $\tilde{A}_{e,q,l}(\theta, \varphi)$ est la matrice ($2^q N^q$ x $2^q$) définie par $\tilde{A}_{e,q,l}(\theta, [\tilde{A}_e(\theta, \varphi)^{\otimes l} \otimes \tilde{A}_e(\theta, \varphi)^{*\otimes(q-l)}]$ et où $\beta_{q,l}(\phi)$ est le vecteur ($2^q$ x 1) défini par $\beta_{q,l}(\phi) \triangleq [\beta(\phi)^{\otimes l} \otimes \beta(\phi)^{*\otimes(q-l)}]$. Dans ces conditions, en utilisant le raisonnement du paragraphe précédent sur le réseaux à diversité de phase, le pseudo-spectre (25) prend la forme :

$$\hat{P}_{Music\text{-}2q\text{-}rec(l)}(\theta, \varphi) =$$

$$\lambda_{min}[(\tilde{A}_{e,q,l}(\theta, \varphi)^{\dagger} \tilde{A}_{e,q,l}(\theta, \varphi))^{-1} \tilde{A}_{e,q,l}(\theta, \varphi)^{\dagger} \hat{U}_{2q,en}(l) \hat{U}_{2q,en}(l)^{\dagger} \tilde{A}_{e,q,l}(\theta, \varphi)] \quad (29)$$

Les directions estimées des sources, $(\hat{\theta}_i, \hat{\phi}_i)$ $(1 \leq i \leq P)$, correspondent aux mimima locaux de (29), lesquels sont à rechercher à partir d'une maîtrise du vecteur directeur $a(\theta, \varphi)$ et d'un maillage de l'espace des directions d'arrivée uniquement, suivi d'une interpolation autour des minimas.

Une estimation, $\hat{\beta}_{q,l}(\phi_i)$, du vecteur $\beta_{q,l}(\phi_i)$ associé à la source $i$ est alors donnée par le vecteur propre de la

matrice $(\tilde{A}_{e,q,l}(\theta_i, \hat{\varphi}_i)^\dagger \tilde{A}_{e,q,l}(\theta_i, \hat{\varphi}_i))^{-1} \tilde{A}_{e,q,l}(\hat{\theta}_i, \hat{\varphi}_i)^\dagger \hat{U}_{2q,en}(l) \hat{U}_{2q,en}(l)^\dagger \tilde{A}_{e,q,l}(\theta_i, \hat{\varphi}_i)$ associé à la valeur propre minimale.

L'algorithme MUSIC-2q-REC peut aussi être mis en oeuvre à partir de réseaux à diversité de polarisation à partir du seul maillage de l'espace des directions.

IDENTIFIABILITE

On peut montrer que le problème du traitement d'antennes à l'ordre $2q$ de $P$ sources non gaussiennes et statistiquement indépendantes à partir d'un réseau à $N$ antennes de coordonnées $(x_n, y_n, z_n)$ et de réponses $f_n(\theta, \varphi, p)$, $1 \leq n \leq N$, est, pour le rangement indexé par $l$, $C_{2q,x}(l)$, similaire à un problème de traitement d'antenne au second ordre pour lequel ces $P$ sources statistiquement indépendantes incident, avec une puissance virtuelle $c_{2q,mi}$ ($1 \leq i \leq P$), sur un réseau virtuel de $N^q$ AV de coordonnées $(x_{k1},^l{}_{k2..} k_q, y_{k1},^l{}_{k2..} k_q, z_{k1},^l k_{2..} k_q)$ et de réponses $f_{k1},^l k_{2..} k_q(\theta, \varphi, p)$, $1 \leq k_j \leq N$ pour $1 \leq j \leq q$, dont en général $N_{2q}^{\bar{l}}$ sont différents, définis respectivement par :

$$(x_{k1},{}^l_{k2.\ kq}, y_{k1},{}^l_{k2.\ kq}, z_{k1},{}^l_{k2.\ kq}) =$$

$$\left( \sum_{j=1}^{l} x_{kj} - \sum_{u=1}^{q-l} x_{kl+u}, \sum_{j=1}^{l} y_{kj} - \sum_{u=1}^{q-l} y_{kl+u}, \sum_{j=1}^{l} z_{kj} - \sum_{u=1}^{q-l} z_{kl+u} \right) \qquad (30)$$

$$f_{k1},{}^l_{k2.\ kq}(\theta, \varphi, p) = \prod_{j=1}^{l} \prod_{u=1}^{q-l} f_{kj}(\theta, \varphi, p) \, f_{kl+u}(\theta, \varphi, p)^{*} \qquad (31)$$

Ainsi le traitement d'antenne aux ordres supérieurs peut être utilisé pour remplacer des antennes et du hardware et pour diminuer ainsi le coût global du système.

Pour illustrer ce concept, la figure 2 présente le réseau virtuel associé à un réseau circulaire uniforme de 5 antennes de rayon $R = 0.8 \lambda$, conjointement avec l'ordre de multiplicité des antennes virtuelles (c'est-à-dire du nombre de capteurs virtuels correspondant à cette antenne) pour $(q, l) = (3, 2)$. Dans ce cas de figure $N_{2q}^{l} = 55.$

Exploitation de $C_{2q,xe}(l)$ et sources rectilignes

La théorie des réseaux virtuels évoquée précédemment s'applique au problème du traitement d'antenne à l'ordre $2q$ des sources rectilignes exploitant l'information contenue dans la matrice, $C_{2q,xe}(l)$, de tous les cumulants d'ordre $2q$ des observations pour le rangement indexé par $l$ en remplaçant le réseau initial à $N$ antennes par le réseau virtuel à $2N$ antennes associé aux observations étendues.. On note alors $N_{2q,e}^{l}$ le nombre d'AV différentes du réseau virtuel d'ordre $2q$ pour le rangement indexé par $l$ associé au problème de traitement d'antenne de sources rectilignes exploitant tous les cumulants d'ordre $2q$ des observations.

Performances de l'algorithme MUSIC-$2q$

On déduit des résultats précédents que le nombre de sources non-Gaussiennes et statistiquement indépendantes pouvant être traitées par l'algorithme MUSIC-$2q$ pour le rangement indexé par $l$ est $\mathrm{Inf}(N_{2q}^{l}, N^q - 1).$ .

Les tables 1 et 2 présentent une borne supérieure, $N_{max}[2q, l]$, de $N_{2q}^{l}$, pour des réseaux respectivement à diversité de polarisation et à diversité d'espace, atteinte pour des réseaux n'ayant pas de symétrie particulière.

Performances de l'algorithme MUSIC-$2q$-REC

Un raisonnement similaire au précédent montre que le nombre de sources non-Gaussiennes et statistiquement indépendantes pouvant être traitées par l'algorithme MUSIC-2$q$-REC pour le rangement indexé par $l$ est

$$\mathrm{Inf}(N_{2q,e}^{l}, 2^{q}N^{q}-1).$$

Table 1 - $N_{max}$[2$q$, $l$] en fonction de N pour plusieurs valeurs de q et l et pour des réseaux à diversité d'espace et de polarisation.

| $m = 2q$ | $l$ | $N_{max}$[2$q$, $l$] |
|---|---|---|
| 4 <br> ($q = 2$) | 2 | $N(N + 1)/2$ |
| | 1 | $N^2$ |
| 6 <br> ($q = 3$) | 3 | $N!/[6(N - 3)!] + N(N - 1) + N$ |
| | 2 | $N!/[2(N - 3)!] + 2N(N - 1) + N$ |
| 8 <br> ($q = 4$) | 4 | $N!/[24(N - 4)!] + N!/[2(N - 3)!] + 1.5N(N - 1) + N$ |
| | 3 | $N!/[6(N - 4)!] + 1.5N!/(N - 3)! + 3N(N-1) + N$ |
| | 2 | $N!/[4(N - 4)!] + 2N!/(N - 3)! + 3.5N(N-1) + N$ |

Table 2 - $N_{max}$[2$q$, $l$] en fonction de N pour plusieurs valeurs de q et l et pour des réseaux à diversité d'espace.

| $m = 2q$ | $l$ | $N_{max}$[2$q$, $l$] |
|---|---|---|
| 4 <br> ($q = 2$) | 2 | $N(N + 1)/2$ |
| | 1 | $N^2-N + 1$ |
| 6 <br> ($q = 3$) | 3 | $N!/[6(N - 3)!] + N(N - 1) + N$ |
| | 2 | $N!/[2(N - 3)!] + N(N - 1) + N$ |
| 8 <br> ($q = 4$) | 4 | $N!/[24(N - 4)!] + N!/[2(N - 3)!] + 1.5N(N - 1) + N$ |
| | 3 | $N!/[6(N - 4)!] + N!/(N - 3)! + 1.5N(N - 1) + N$ |
| | 2 | $N!/[4(N - 4)!] + N!/(N - 3)! + 2N(N - 1) + 1$ |

L'invention concerne notamment un dispositif de goniométrie à haute résolution à un ordre pair arbitraire, 2q, avec q > 2 disposé dans un réseau comprenant N antennes à bande étroite recevant chacune la contribution de P sources, le dispositif comprenant un processeur adapté à exécuter les étapes du procédé décrit précédemment.

REFERENCES

[1] G. BIENVENU, L. KOPP, "optimality of high resolution array processing using the eigensystem approach", IEEE Trans. Acou. Speech and Sign. Proc., Vol 31, N˚5, pp. 1235-1247, Oct 1983.
[2] J.P. BURG, "The relationship between maximum entropy spectra and maximum likelihood spectra", Geophysics, Vol 37, N˚2, pp. 375-376, April 1972.
[3] J. CAPON, "High resolution frequency-wavenumber spectrum analysis", Proc. IEEE, Vol 57, N˚8, pp. 1408-1418, Feb. 1969.
[4] P. CHEVALIER, A. FERREOL, "On the virtual array concept for the fourth-order direction finding problem", IEEE Trans. Signal Processing, Vol 47, N˚9, pp. 2592-2595, Sept. 1999
[5] R.T. COMPTON, JR ., "Adaptive Antennas - Concepts and Performance", Prentice Hall, Englewood Cliffs, New Jersey, 07632, 1988.
[6] M.C. DOGAN, J.M. MENDEL, "Applications of cumulants to array processing - Part I : Aperture extension and array calibration", IEEE Trans. Signal Processing, Vol 43, N˚5, pp. 1200-1216, May 1995.
[7] A. FERREOL, P. CHEVALIER, "On the behavior of current second and higher order blind source separation methods for cyclostationary sources", IEEE Trans. Signal Processing, Vol 48, N° 6, pp. 1712-1725, June 2000. Errata Vol 50, N°4, p 990, April 2002.

[8] A. FERREOL, P. CHEVALIER, L. ALBERA, "Higher order blind separation of non zero-mean cyclostationary sources", Proc. EUSIPCO 02, Toulouse, (France), pp. 103-106, Sept. 2002.

[9] A. FERREOL, P. CHEVALIER, L. ALBERA, "Second order blind separation of first and second order cyclostationary sources - Application to AM, FSK, CPFSK and Deterministic sources", IEEE Trans. Signal Processing, Vol 52, N° 4, pp. 845-861, April 2004.

[10] B. FRIEDLANDER, "A sensitivity analysis of the MUSIC algorithm", IEEE Trans. Acou. Speech. and Signal Processing, Vol 38, N° 10, pp. 1740-1751, Oct. 1990.

[11] P. Mc CULLAGH, "Tensor methods in Statistics", Chapman and Hall, Monographs on Statistics and applied Probability, 1987.

[12] A. PAULRAJ, T. KAILATH, "Eigenstructure methods for direction of arrival estimation in the présence of unknown noise field", IEEE Trans. Acou. Speech and Sign. Proc., Vol 34, N°1, pp. 13-20, Feb. 1986.

[13] B. PORAT, B. FRIEDLANDER, "Direction finding algorithms based on higher order statistics", IEEE Trans. Signal Processing, Vol 39, N°9, pp. 2016-2024, Sept 1991.

[14] R.O. SCHMIDT, "Multiple emitter location and signal parameter estimation", IEEE Trans. Ant. Prop., Vol 34, N°3, pp. 276-280, March 1986.

[15] A.L. SWINDLEHURST, T. KAILATH, "A performance analysis of subspaced-based methods in the presence of model errors, Part I : The MUSIC algorithm", IEEE Trans. Signal Processing, Vol 40, N°3, pp. 1758-1773, July 1992.

## Revendications

1. - Procédé de goniométrie à haute résolution à un ordre pair arbitraire, $2q$ ($q > 2$), pour un réseau comprenant N antennes à bande étroite recevant chacune la contribution de P sources, dans lequel on exploite les propriétés algébriques d'une matrice de cumulants d'ordre 2q, $C_{2q,x}(l)$, dont les coefficients sont les cumulants circulaires d'ordre 2q, $Cum[x_{i_1}(t),..., x_{i_q}(t), x_{i_{q+1}}(t)^*, ..., x_{i_{2q}}(t)^*]$, des observations reçues sur chaque antenne, pour des rangements de cumulants indexés par $l$, afin de définir un sous-espace signal et un sous-espace bruit, et **caractérisé en ce qu'** il comporte au moins les étapes suivantes :

   • estimer $\hat{C}_{2q,x}(l)$, la matrice de cumulant d'ordre 2q, $C_{2q,x}(l)$, à partir de $L$ vecteurs échantillons $x(k)$, $1 \le k \le L$, en utilisant un estimateur des cumulants circulaires d'ordre $2q$ des observations,
   • décomposer en éléments propres la matrice estimée $\hat{C}_{2q,x}(l)$, et extraire une estimée, $\hat{U}_{2q,n}(l)$, de la matrice unitaire $U_{2q,n}(l)$ des vecteurs propres de $C_{2q,x}(l)$,
   • calculer le pseudo-spectre estimé pour un maillage donné de l'espace des directions ($\theta$, $\varphi$)

$$\hat{P}_{Music-2q(l)}(\theta, \varphi) \triangleq$$

$$\frac{[a(\theta, \varphi)^{\otimes l} \otimes a(\theta, \varphi)^{*\otimes(q-l)}]^\dagger \, \hat{U}_{2q,n}(l) \, \hat{U}_{2q,n}(l)^\dagger \, [a(\theta, \varphi)^{\otimes l} \otimes a(\theta, \varphi)^{*\otimes(q-l)}]}{[a(\theta, \varphi)^{\otimes l} \otimes a(\theta, \varphi)^{*\otimes(q-l)}]^\dagger \, [a(\theta, \varphi)^{\otimes l} \otimes a(\theta, \varphi)^{*\otimes(q-l)}]}$$

2. - Procédé de goniométrie selon la revendication 1, **caractérisé en ce que** pour un réseau à diversité de polarisation on calcule le pseudo-spectre estimé pour un maillage donné de l'espace des directions ($\theta$, $\varphi$) et de l'espace des polarisations p et on recherche des minima locaux.

3. - Procédé de goniométrie à haute résolution à un ordre pair arbitraire, $2q$ ($q > 2$), pour un réseau comprenant N antennes à bande étroite recevant chacune la contribution de P sources, dans lequel on exploite les propriétés algébriques d'une matrice de cumulants d'ordre 2q, $C_{2q,x}(l)$, dont les coefficients sont les cumulants circulaires d'ordre $2q$, $Cum[x_{i_1}(t),..., x_{i_q}(t), x_{i_{q+1}}(t)^*, ..., x_{i_{2q}}(t)^*]$, des observations reçues sur chaque antenne, pour des rangements de cumulants indexés par $l$, afin de définir un sous-espace signal et un sous-espace bruit et en ce que pour des réseaux à diversité de polarisation,

   **caracterise en ce qu'** il comporte au moins les étapes suivantes :

   • estimer $\hat{C}_{2q,x}(l)$, la matrice de covariance $C_{2q,x}(l)$ à partir de $L$ vecteurs échantillons $x(k)$, $1 \le k \le L$, en utilisant un estimateur des cumulants circulaires d'ordre $2q$ des observations,

- décomposer en éléments propres la matrice estimée $\hat{C}_{2q,x}(l)$, et extraire une estimée, $\hat{U}_{2q,n}(l)$, de la matrice unitaire $U_{2q,n}(l)$ des vecteurs propres de $C_{2q,x}(l)$,
- calculer le pseudo-spectre estimé

$$\hat{P}_{2q\text{-}Music(l)}(\theta, \varphi) =$$

$$\lambda_{min}[(A_{12,q,l}(\theta, \varphi)^{\dagger} A_{12,q,l}(\theta, \varphi))^{-1} A_{12,q,l}(\theta, \varphi)^{\dagger} \hat{U}_{2q,n}(l) \hat{U}_{2q,n}(l)^{\dagger} A_{12,q,l}(\theta, \varphi)]$$

pour un maillage donné de l'espace des directions $(\theta, \varphi)$, à partir d'une maîtrise des vecteurs directeurs $a(\theta, \varphi, p_1)$ et $a(\theta, \varphi, p_2)$ dans les deux polarisations $p_1$ et $p_2$ et rechercher des minima locaux, où $A_{12}(\theta, \varphi)$ est la matrice $(N \times 2)$ définie par $A_{12}(\theta, \varphi) \overset{\Delta}{=} [a(\theta, \varphi, p_1), a(\theta, \varphi, p_2)]$ et où $\lambda_{min}[X]$ correspond à la valeur propre minimale de la matrice X.

4. - Procédé selon la revendication 3, **caractérisé en ce qu'**il comporte au moins les étapes suivantes :

- estimer $\hat{\alpha}_{q,l}(p_i)$, le vecteur $\alpha_{q,l}(p_i)$ associé à la source $i$ est alors donnée par le vecteur propre de la matrice $(A_{12,q,l}(\hat{\theta}_i, \hat{\varphi}_i)^{\dagger} A_{12,q,l}(\hat{\theta}_i, \hat{\varphi}_i))^{-1} A_{12,q,l}(\hat{\theta}_i, \hat{\varphi}_i)^{\dagger} \hat{U}_{2q,n}(l) \hat{U}_{2q,n}(l)^{\dagger} A_{12,q,l}(\hat{\theta}_i, \hat{\varphi}_i)$ associé à la valeur propre minimale,
- décomposer le vecteur $\hat{\alpha}_{q,l}(p_i)$ en $2^{q-2}$ sous-vecteurs $(4 \times 1)$, $\hat{\alpha}_{q,l,s}(p_i)$, $1 \le s \le q - 2$, telle que $\hat{\alpha}_{q,l}(p_i) = [\hat{\alpha}_{q,l,1}(p_i)^{\mathsf{T}},...., \hat{\alpha}_{q,l,(q-2)}(p_i)^{\mathsf{T}}]^{\mathsf{T}}$ et rangement des composantes de chaque vecteur $\hat{\alpha}_{q,l,s}(p_i)$ dans une matrice $(2 \times 2)$ $\hat{\Gamma}_{q,l,s}(p_i)$ telle que :

$\Gamma_{q,l,s}(p_i)[k,j] = \hat{\alpha}_{q,l,s}(p_i)[2(k-1) + j]$, où $\Gamma_{q,l,s}(pi)[k,j]$ et $\hat{\alpha}_{q,l,s}(p_i)[k]$ sont l'élément $[k, j]$ et la composante k respectivement de la matrice $\hat{\Gamma}_{q,l,s}(pi)$ et du vecteur $\hat{\alpha}_{q,l,s}(p_i)$.
$\alpha(p)$ étant constitué des coefficients réels de la décomposition du champ incident en somme de deux champs polarisés orthogonalement,

- Diagonaliser de manière conjointe les matrices $\hat{\Delta}_{q,l,s}(pi)$, $1 \le s \le q - 2$, pour obtenir une estimée, $\hat{\alpha}(p_i)$, du vecteur $\alpha(p_i)$ des paramètres de polarisation de la source i, estimée correspondant au vecteur propre associé à la valeur propre maximale, où $\hat{\Delta}_{q,l,s}(p_i)$ est définie par :

$$\hat{\Delta}_{q,l,s}(p_i) = \hat{\Gamma}_{q,l,s}(p_i) \hat{\Gamma}_{q,l,s}(p_i)^{\dagger} \text{ si } q - l = 0$$

$$\hat{\Delta}_{q,l,s}(p_i) = \hat{\Gamma}_{q,l,s}(p_i) \hat{\Gamma}_{q,l,s}(p_i)^{\dagger} \text{ si } q - l = 1$$

$$\hat{\Delta}_{q,l,s}(p_i) = \hat{\Gamma}_{q,l,s}(p_i)^{*} \hat{\Gamma}_{q,l,s}(p_i)^{\mathsf{T}} \text{ si } q - l > 1$$

5. - Procédé de goniométrie à haute résolution à un ordre pair arbitraire, $2q$ $(q > 2)$, pour un réseau comprenant N antennes à bande étroite recevant chacune la contribution de P sources, dans lequel on exploite les propriétés algébriques d'une matrice de cumulants d'ordre 2q, $C_{2q,x}(l)$, dont les coefficients sont les cumulants circulaires d'ordre $2_q$, $Cum[x_{i1}(t),..., x_{iq}(t), x_{iq+1}(t)^{*}, .... x_{i2q}(t)^{*}]$, des observations reçues sur chaque antenne, pour des rangements de cumulants indexés par l, afin de définir un sous-espace signal et un sous-espace bruit pour des sources rectilignes, **caractérisé en ce qu'**il comporte au moins les étapes suivantes :

- estimer $\hat{C}_{2q,xe}(l)$, la matrice $C_{2q,xe}(l)$ de cumulants d'ordre 2q des observations étendues, $x_e(t) \overset{\Delta}{=} [x(t)^{\mathsf{T}}, x(t)^{\dagger}]^{\mathsf{T}}$, où $x(t)$ est le vecteur observation à partir de L vecteurs échantillons x(k), $1 \le k \le L$, en utilisant un estimateur des cumulants d'ordre 2q des observations,
- décomposer en éléments propres la matrice, $\hat{C}_{2q,xe}(l)$, et extraire une estimée, $\hat{U}_{2q,en}(l)$, de la matrice $U_{2q,en}(l)$ des vecteurs propres de l'espace bruit de la matrice $C_{2q,xe}(l)$.
- calculer le pseudo-spectre estimé

$$\hat{P}_{Music\text{-}2q\text{-}rec(l)}(\theta, \varphi, \phi) \;\triangleq$$

$$\frac{[a_e(\theta, \varphi, \phi)^{\otimes l} \otimes a_e(\theta, \varphi, \phi)^{*\otimes(q-l)}]^\dagger \; \hat{U}_{2q,en}(l)\, \hat{U}_{2q,en}(l)^\dagger \, [a_e(\theta, \varphi, \phi)^{\otimes l} \otimes a_e(\theta, \varphi, \phi)^{*\otimes(q-l)}]}{[a_e(\theta, \varphi, \phi)^{\otimes l} \otimes a_e(\theta, \varphi, \phi)^{*\otimes(q-l)}]^\dagger \, [a_e(\theta, \varphi, \phi)^{\otimes l} \otimes a_e(\theta, \varphi, \phi)^{*\otimes(q-l)}]}$$

pour un maillage donné de l'espace des directions $(\theta, \varphi)$ et de l'espace des phases $\phi$ et rechercher des minima locaux.

6. - Procédé selon la revendication 5, **caractérisé en ce qu'**il comporte au moins les étapes suivantes :

• estimer, $\hat{C}_{2q,xe}(l)$, la matrice $\hat{C}_{2q,xe}(l)$ de l'ensemble des cumulants d'ordre $2q$ des observations, à partir de $L$ vecteurs échantillons x(k), $1 \leq k \leq L$, en utilisant un estimateur adéquat des cumulants d'ordre 2q des observations,
• décomposer en éléments propres de la matrice, $\hat{C}_{2q,xe}(l)$, et extraire une estimée, $\hat{U}_{2q,en}(l)$, de la matrice $U_{2q,en}(l)$ des vecteurs propres de l'espace bruit de la matrice $C_{2q,xe}(l)$,
• Calculer le pseudo-spectre estimé

$$\hat{P}_{Music\text{-}2q\text{-}rec(l)}(\theta, \varphi) \;=$$
$$\lambda_{min}[(\tilde{A}_{e,q,l}(\theta, \varphi)^\dagger \, \tilde{A}_{e,q,l}(\theta, \varphi))^{-1} \, \tilde{A}_{e,q,l}(\theta, \varphi)^\dagger \, \hat{U}_{2q,en}(l)\, \hat{U}_{2q,en}(l)^\dagger \, \tilde{A}_{e,q,l}(\theta, \varphi)]$$

où $\tilde{A}_{e,q,l}(\theta, \varphi)$ est la matrice $(2^q N^q \times 2^q)$ définie par $\tilde{A}_{e,q,l}(\theta, \varphi) \triangleq [\tilde{A}_e(\theta,\varphi)^{\otimes l} \otimes \tilde{A}_e(\theta, \varphi)^{*\otimes(q-l)}]$
où $\tilde{A}_e(\theta, \varphi)$ est la matrice $(2N \times 2)$ définie par

$$\tilde{A}_e(\theta, \varphi) \;\triangleq\; \begin{pmatrix} a(\theta, \varphi) & 0 \\ 0 & a(\theta, \varphi)^* \end{pmatrix}$$

où **0** est le vecteur nul de dimension $(N \times 1)$ et $a(\theta\ \varphi)$ le vecteur directeur associé à la direction $(\theta, \varphi)$, pour un maillage donné de l'espace des directions d'arrivée,
• estimer le vecteur $\beta_{q,l}(\Phi i)$ associé à la source $i$ est donnée par le vecteur propre de la matrice $(\tilde{A}_{e,q,l}(\hat{\theta}_i, \hat{\phi}_i)^\dagger \hat{A}_{e,q,l}(\hat{\theta}_i, \hat{\phi}i))^{-1} \tilde{A}e,q,l(\theta_i, \varphi_i)^\dagger, \hat{U}_{2q,en}(l)\, \hat{U}_{2q,en}(l)^\dagger \, \tilde{A}_{e,q,l}(\hat{\theta}i, \hat{\phi}_i)$ associé à la valeur propre minimale.

7. - Procédé selon la revendication 6, **caractérisé en ce qu'**il comporte au moins les étapes suivantes :

• estimer $\hat{\beta}_{q,l}(\phi_i)$, du vecteur $\beta_{qN}(\phi_i)$ associé à la source i par le vecteur propre de la matrice $(\tilde{A}_{e,q,l}(\hat{\theta}_i, \hat{\phi}i)^\dagger \bar{A}_{e,q,l}(\hat{\theta}_i, \hat{\phi}_i))^{-1} \hat{A}_{e,q,l}(\hat{\theta}_i, \hat{\phi}_i)^\dagger \, \hat{U}_{2q,en}(l)\, \hat{U}_{2q,en}(l) \, \hat{A}_{e,q,l}(\hat{\theta}_i, \hat{\phi}_i)$ associé à la valeur propre minimale, où $(\hat{\theta}_i, \hat{\phi}_i)$ est la direction estimée de la source i,
• décomposer le vecteur $\hat{\beta}_{q,l}(\phi_i)$ en $2^{q-2}$ sous-vecteurs $(4 \times 1)$, $\hat{\beta}_{q,l,s}(\Phi i)$, $1 \leq s \leq q - 2$, telle que $\hat{\beta}_{q,l}(\phi_i) = [\hat{\beta}_{q,l,1}(\phi_i)^T \ldots, \hat{\beta}_{q,l,(q-2)}(\phi_i)^T]^T$ et rangement des composantes de chaque vecteur $\hat{\beta}_{q,l,s}(\phi_i)$ dans une matrice $(2 \times 2)$ $\hat{\Gamma}_{q,l,s}(\phi_i)$ telle que $\hat{\Gamma}_{q,l,i}(\phi_i)[k.j] = \hat{\beta}_{q,l,s}(\phi_i)[2(k - 1) + j]$, où $\hat{\Gamma}_{q,l,s}(\phi_i)[k, j]$ et $\hat{\beta}_{q,l,s}(\phi_i)[k]$ sont l'élément $[k, j]$ et la composante k respectivement de la matrice $\hat{\Gamma}_{q,l,s}(\phi_i)$ et du vecteur $\hat{\beta}_{q,l,s}(\phi_i)$,
• diagonaliser de manière conjointe les matrices $\Delta_{q,l,s}(\phi_i)$, $1 \leq s \leq q - 2$, pour obtenir une estimée $\hat{\beta}(\phi_i)$, du vecteur $\beta(\phi_i)$ $[e^{j\phi i}, e^{-j\phi i}]^T$ des paramètres de phase de la source i, estimée correspondant au vecteur propre associé à la valeur propre maximale, où $\Delta_{q,l,s}(\phi_i)$ est définie par :

$$\hat{\Delta}_{q,l,s}(\phi i) \;=\; \hat{\Gamma}_{q,l,s}(\phi i)\, \hat{\Gamma}_{q,l,s}(\phi i)^\dagger \;\; \text{si } q - l = 0$$

$$\hat{\Delta}_{q,l,s}(\phi i) \;=\; \hat{\Gamma}_{q,l,s}(\phi i)\, \hat{\Gamma}_{q,l,s}(\phi i)^\dagger \;\; \text{si } q - l = 1$$

$$\hat{\Delta}_{q,l,s}(\phi_i) = \hat{\Gamma}_{q,l,s}(\phi_i)^* \, \hat{\Gamma}_{q,l,s}(\phi_i)^T \text{ si } q - l > 1$$

**8.** - Procédé selon l'une des revendications 1 à 6, **caractérisé en ce que** l'étape de décomposition comprend une étape d'estimation de rang de la matrice $\hat{U}_{2q,en}(l)$.

**9.** - Dispositif de goniométrie à haute résolution à un ordre pair arbitraire, 2q avec q > 2, dans un réseau comprenant N antennes à bande étroite recevant chacune la contribution de P sources, **caractérisé en ce qu'**il comporte un processeur adapté à mettre en oeuvre les étapes du procédé selon l'une des revendications 1 à 8.

**Claims**

**1.** A process for high-resolution goniometry at an arbitrary even order, $2q\ (q > 2)$, for an array comprising N narrowband antennae each receiving the contribution of P sources, wherein the algebraic properties of a matrix of cumulants of the order 2q $C_{2q',x}(l)$ is used, the coefficients of which are the circular cumulants of the order 2q, $\text{Cum}^{[x_{il},(t),....}x_{ii(t)}.$ $x_{iq+1}^{(t)*}. ...x_{i2q}(t)^*]$, of the observations received on each antenna, for the arrangement of cumulants indexed by $l$, so as to define a signal sub-space and a noise sub-space, and **characterised in that** it includes at least the following steps:

- estimating $\hat{C}_{2q.x}(l)$, the cumulant matrix of the order 2q, $C_{2q,x}(l)$, from $L$ sample vectors $x(k),\ 1{\leq}k{\leq}L$ using an estimator of the circular cumulants of the order 2q of the observations,
- decomposing the estimated matrix $\hat{C}_{2q-x}(l)$ into specific elements and extracting an estimate $\hat{U}_{2q,n}(l)$ of the unit matrix $U_{2q,n}(l)$ of the specific vectors of $C_{2q}, x(l),$
- calculating the estimated pseudo-spectrum for a predetermined grid of the space of directions $(\theta, \varphi)$

$$\hat{P}_{Music\text{-}2q(l)}(\theta, \varphi) \triangleq$$
$$\frac{[a(\theta, \varphi)^{\otimes l} \otimes a(\theta, \varphi)^{*\otimes(q-l)}]^{\dagger} \, \hat{U}_{2q,n}(l) \, \hat{U}_{2q,n}(l)^{\dagger} \, [a(\theta, \varphi)^{\otimes l} \otimes a(\theta, \varphi)^{*\otimes(q-l)}]}{[a(\theta, \varphi)^{\otimes l} \otimes a(\theta, \varphi)^{*\otimes(q-l)}]^{\dagger} \, [a(\theta, \varphi)^{\otimes l} \otimes a(\theta, \varphi)^{*\otimes(q-l)}]}$$

**2.** The goniometry process according to claim 1, **characterised in that** for a polarisation diversity array the estimated pseudo-spectrum is calculated for a predetermined grid of the space of directions $(\theta, \varphi)$ and the space of polarisations p and the local minima are sought.

**3.** A process for high-resolution goniometry at an arbitrary even order, $2q\ (q > 2)$, for an array comprising N narrowband antennae each receiving the contribution of P sources, wherein the algebraic properties of a matrix of cumulants of the order $2q,\ C_{2q',x}(l)$ is used, the coefficients of which are the circular cumulants of the order 2q, $\text{Cum}\ [x_{i_1}(t)......$ $x_{i_q}(t), x_{i_{q+1}}(t)^*, .... x_{i_{2q}}(t)^*]$, of the observations received on each antenna, for the arrangement of cumulants indexed by $l$, so as to define a signal sub-space and a noise sub-space and, for the polarisation diversity arrays, **characterised in that** it includes at least the following steps:

- estimating $\hat{C}_{2q,x}(l)$, the covariance matrix $C_{2q,x}(l)$ from L sample vectors $x(k),\ 1{\leq} k{\leq}L$ using an estimator of the circular cumulants of the order 2q of the observations,
- decomposing the estimated matrix $\hat{C}_{2q,x}(l)$ into eigen value elements, and extracting an estimate $\hat{U}_{2q,n}(l)$ of the unit matrix $U_{2q',n}(l)$ of the specific vectors of $C_{2q,x}(l),$
- calculating the estimated pseudo-spectrum

$$\hat{P}_{2q\text{-}Music(l)}(\theta, \varphi) =$$
$$\lambda_{min}[(A_{12,q,l}(\theta, \varphi)^{\dagger} A_{12,q,l}(\theta, \varphi))^{-1} A_{12,q,l}(\theta, \varphi)^{\dagger} \, \hat{U}_{2q,n}(l) \, \hat{U}_{2q,n}(l)^{\dagger} A_{12,q,l}(\theta, \varphi)]$$

for a predetermined grid of the space of directions $(\theta, \varphi)$, on the basis of management of the direction vectors

# EP 1 869 489 B1

$\alpha(\theta, \varphi, p1)$ and $\alpha(\theta, \varphi, p2)$ in the two polarisations p1 and p2 and finding the local minima, where $A_{12}(\theta, \varphi)$ is the matrix (N x 2) defined by $A_{12}(\theta, \overset{\Delta}{=}\varphi)$ [a($\theta.\varphi.p_1$).$\alpha(\theta, \varphi, p_2)$)] and where $\lambda_{min}[X]$ corresponds to the actual minimum value of the matrix X.

4. The process according to claim 3, **characterised in that** it includes at least the following steps:

• estimating $\hat{\alpha}_{q,l}(p_i)$, the vector $\alpha_{q,l}(p_i)$ associated with the source $i$ is thus provided by the specific vector of the matrix $(A_{12,q,l}(\theta i, \hat{\varphi}i)^\dagger A_{12.q,l}(\theta_i, \hat{\varphi}_i)^{-1} A_{12,q,l}(\theta_i, \varphi_i)^\dagger \hat{U}_{2q,n}(l)^\dagger A_{12,q,l}(\theta_i, \hat{\varphi}_i)$ associated with the minimum eigen value,
• decomposing the vector $\alpha_{q,l}(pi)$ into $2^{q-2}$ sub-vectors (4 x 1). $\hat{\alpha}_{q,l,s}(pi)$, $1{\le}s{\le}q$ - 2, so that $\hat{\alpha}_{q,l}(pi)= [\hat{\alpha}_{q,l,i}(p_i)^T,...., \alpha_{q,l,(q-2)}(p_i)^T]^T$ and arrangement of the components of each vector $\hat{\alpha}_{q,l,s}(p_i)$ in a matrix $^{(2 x2)} \hat{\Gamma}_{q,l,s}(p_i)$ so that:

$\hat{\Gamma}_{q,l,s}(p_i)[k, j] = \hat{\alpha}_{q,l,s}(p_i)[2(k-1)+j]$ , where $\hat{\Gamma}_{q,l,s}(p_i) [k, j]$ and $\hat{\alpha}_{q,l,s}(pi)[k]$ the element [k, j] and the component $k$ respectively of the matrix $\hat{\Gamma}_{q,l,s}(p_i)$ and of the vector $\hat{\alpha}_{q,l,s}(pi)$, $\alpha(p)$ being constituted by the actual coefficients of the decomposition of the incident field into the total of two orthogonally polarised fields,

• jointly diagonalising the matrices $\hat{\Delta}_{q,l,s}(p_i)$, $1{\le}s{\le}q$-2. to obtain an estimate, $\hat{\alpha}(pi)$, of the vector $\alpha(pi)$ of the polarisation parameters of the source $i$, estimated corresponding to the specific vector associated with the specific maximum value, where $\hat{\Delta}q,l,s(p_i)$ is defined by:

$$\hat{\Delta}_{q,l,s}(p_i) = \hat{\Gamma}_{q,l,s}(p_i)\,\hat{\Gamma}_{q,l,s}(p_i)^\dagger \text{ if } q - l = 0$$

$$\hat{\Delta}_{q,l,s}(p_i) = \hat{\Gamma}_{q,l,s}(p_i)\,\hat{\Gamma}_{q,l,s}(p_i)^\dagger \text{ if } q - l = 1$$

$$\hat{\Delta}_{q,l,s}(p_i) = \hat{\Gamma}_{q,l,s}(p_i)^*\,\hat{\Gamma}_{q,l,s}(p_i)^T \text{ if } q - l > 1.$$

5. A process for high-resolution goniometry at an arbitrary even order, $2q\ (q > 2)$, for an array comprising N narrowband antennae each receiving the contribution of P sources, wherein the algebraic properties of a matrix of cumulants of the order 2q, $C_{2q}x(l)$ is used, the coefficients of which are the circular cumulants of the order 2q, Cum[$xi_1(t)... xi_q$ (1) $xi_{q+1}(t)^*, ... xi_{2q}(t)^*$], of the observations received on each antenna, for arrangements of cumulants indexed by $l$, so as to define a signal sub-space and a noise sub-space for line sources, **characterised in that** it includes at least the following steps:

• estimating $\hat{C}_{2q,xx}(t)$, the matrix $C_{2q,xe}(l)$ of cumulants of the order 2q of the extended observations, $x_e(t) \overset{\Delta}{=}$ [$x(t)^T$, $x(t)^\dagger]^T$ , where x(i) is the observation vector from L sample vectors x(k), $1{\le} k {\le}L$ using an estimator of the cumulants of the order 2q of the observations,
• decomposing the estimated matrix $\hat{C}_{2q,xe}(l)$ into eigen elements and extracting an estimate $\hat{U}_{2q.m}(l)$ of the matrix $U_{2q,en}(l)$ of the specific vectors of the noise space of the matrix $C_{2q,xe}(l)$,
• calculating the estimated pseudo-spectrum

$$\hat{P}_{Music-2q-rec(l)}(\theta, \varphi, \phi) \overset{\Delta}{=}$$

$$\frac{[a_e(\theta, \varphi, \phi)^{\otimes l} \otimes a_e(\theta, \varphi, \phi)^{*\otimes(q-l)}]^\dagger \, \hat{U}_{2q,en}(l)\, \hat{U}_{2q,en}(l)^\dagger \, [a_e(\theta, \varphi, \phi)^{\otimes l} \otimes a_e(\theta, \varphi, \phi)^{*\otimes(q-l)}]}{[a_e(\theta, \varphi, \phi)^{\otimes l} \otimes a_e(\theta, \varphi, \phi)^{*\otimes(q-l)}]^\dagger \, [a_e(\theta, \varphi, \phi)^{\otimes l} \otimes a_e(\theta, \varphi, \phi)^{*\otimes(q-l)}]}$$

for a predetermined grid of the space of directions $(\theta, \varphi)$ and of the space of the phases $\Phi$ and finding the local minima.

6. The process according to claim 5, **characterised in that** it includes at least the following steps:

• estimating $\hat{C}_{2qxe}(l)$ the matrix $\hat{C}_{2q,xe}(l)$ of the set of cumulants of the order 2q of the observations, from $L$ sample vectors x(k), $1 \leq k \leq L$ using a suitable estimator of the cumulants of the order 2q of the observations,

• decomposing into specific elements of the matrix, $\hat{C}_{2q,xe}(l)$ and extracting an estimate $\hat{U}_{2q,en}(l)$ of the matrix $U_{2q,en}(l)$ of the specific vectors of the noise space of the matrix $C_{2q.x,e}(l)$,

• calculating the estimated pseudo-spectrum

$$\hat{P}_{Music\text{-}2q\text{-}rec(l)}(\theta, \varphi) =$$

$$\lambda_{minl}[(\tilde{A}_{e,q,l}(\theta, \varphi)^{\dagger} \tilde{A}_{e,q,l}(\theta, \varphi))^{-1} \tilde{A}_{e,q,l}(\theta, \varphi)^{\dagger} \hat{U}_{2q,en}(l) \hat{U}_{2q,en}(l)^{\dagger} \tilde{A}_{e,q,l}(\theta, \varphi)]$$

where $\tilde{A}_{e,q,l}(\theta, \varphi)$ is the matrix $(2^q N^q \times 2^q)$ defined by

$$\tilde{A}_{e,q,l}(\theta, \varphi) \triangleq [\tilde{A}_e(\theta, \varphi)^{\otimes l} \otimes \tilde{A}_e(\theta, \varphi)^{*\otimes(q-l)}]$$

where $\tilde{A}_e(\theta, \varphi)$ is the matrix (2N x 2) defined by

$$\tilde{A}_e(\theta, \varphi) \triangleq \begin{pmatrix} a(\theta, \varphi) & 0 \\ 0 & a(\theta, \varphi)^* \end{pmatrix}$$

where 0 is the zero vector of the dimension (N x 1) and $\alpha(\theta, \varphi)$ the direction vector associated with the direction $(\theta, \varphi)$, for a predetermined grid of the space of the arrival directions,

• estimating the vector $\beta q,l(\phi_i)$ associated with the source i which is provided by the specific vector of the matrix $(\tilde{A}_{e,q,l}(\theta_i, \varphi_i)^{\dagger}\tilde{A}_{e,q,l}(\theta_i, \hat{\phi}_i))^{-1}, \tilde{A}_{e,q,l}(\theta_i, \hat{\phi}i)^{\dagger} \hat{U}_{2q,en}(l) \hat{U}_{2q.en}(l)^{\dagger} \tilde{A}_{e,q,l}(\theta_i.\varphi_i)$ associated with the eigen minimum value.

7. The process according to claim 6, **characterised in that** it includes at least the following steps:

• estimating $\hat{\beta}_{q,l}(\phi_i)$ of the vector $\beta_{q,l}(\phi_i)$ associated with the source i by the specific vector of the matrix

$$(\tilde{A}_{e,q,l}(\theta_i, \hat{\phi}_i)^{\dagger}\tilde{A}_{e,q,l}(\theta_i, \hat{\phi}_i))^{-1} \tilde{A}_{e,q,l}(\theta_i, \hat{\phi}_i)^{\dagger} \hat{U}_{2q,en}(l) \hat{U}_{2q,en}(l)^{\dagger} \tilde{A}_{e,q,l}(\theta_i, \hat{\phi}_i)$$

associated with the minimum specific value, where $(\hat{\theta}_{i,}\varphi_i)$ is the estimated direction of the source i,

• dividing the vector $\beta_{q,l}(\Phi_i)$ into $2^{4-2}$ sub-vectors $(4 \times 1)$ $\beta_{q,l}(\Phi_i), 1 \leq s \leq q - 2$, so that $\beta_{q,l}(\phi_i) = [\beta_{q,l,i}(\phi_i)^{T}. \ldots \hat{\beta}_{q,l(q-2)}(\phi_i)^{T}]^{T}$ and arranging the components of each vector $\beta_{q,l,s}(\phi_i)$ in a matrix (2 x 2) $\hat{\Gamma}_{q,l,s}(\phi_i)$ such that:

$\hat{\Gamma}_{q,l,x}(\phi_i)[k,j] \simeq \hat{\beta}_{q,l,s}(\phi_i)[2(k-1)+j]$ where $\hat{\Gamma}_{q,l,x}(\phi_i)(k,j)$ and $\hat{\beta}_{q,l,s}(\phi_i)[k]$ are the element [k,j] and the component k respectively of the matrix $\hat{\Gamma}_{q,l,s}(\phi_i)$ and of the vector $\beta q,l,s(\phi_i)$,

• jointly diagonalising the matrices $\hat{\Delta}_{q,l,s}(\phi_i), 1 \leq s \leq q -2$, to obtain an estimate, $\hat{\beta}(\phi i)$, of the vector $\beta(\phi_i) \triangleq [p^{i\phi i}, e^{-j\phi i}]^{T}$ of the phase parameters of the source i, estimated corresponding to the eigen vector associated with the specific maximum value, where $\hat{\Delta}_{q,l,s}(\phi_i)$ is defined by:

$$\hat{\Delta}_{q,l,s}(\phi_i) \simeq \hat{\Gamma}_{q,l,s}(\phi_i) \hat{\Gamma}_{q,l,s}(\phi_i)^{\dagger} \text{ if } q - l = 0$$

$$\hat{\Delta}_{q,l,s}(\phi_i) \simeq \hat{\Gamma}_{q,l,s}(\phi_i) \hat{\Gamma}_{q,l,s}(\phi_i)^{\dagger} \text{ if } q - l = 1$$

$$\hat{\Delta}_{q,l,s}(\phi_i) \simeq \hat{\Gamma}_{q,l,s}(\phi_i)^{*} \hat{\Gamma}_{q,l,s}(\phi_i)^{T} \text{ if } q - l > 1.$$

8. The process according to any one of claims 1 to 6, **characterised in that** the division step includes a step of estimating a row of the matrix $\hat{U}_{2q,en}(l)$.

9. A high-resolution goniometry device at an arbitrary even order, 2q where q > 2, in an array including N narrowband antennae each receiving the contribution of P sources, **characterised in that** it includes a processor suitable for implementing the steps of the process according to any one of claims 1 to 8.

**Patentansprüche**

1. Verfahren zur Hochauflösungsgoniometrie einer willkürlichen geradzahligen Ordnung, 2q (q > 2), für ein Array, das N Schmalbandantennen umfasst, die jeweils den Beitrag von P Quellen empfangen, wobei die algebraischen Eigenschaften einer Matrix von Kumulanten der Ordnung 2q $C_{2q},x(l)$ genutzt werden, deren Koeffizienten die Kreiskumulanten der Ordnung 2q, Cum $[xi_1(t)....xi_q(t), xi_{q+1}(t)^*,.... x_{i2q}(t)^*]$ der an jeder Antenne empfangenen Beobachtungen für um 1 indexierte Kumulantenanordnungen sind, um einen Signalsubraum und einen Rauschsubraum zu definieren, und **dadurch gekennzeichnet, dass** es wenigstens die folgenden Schritte beinhaltet:

- Schätzen von $\hat{C}_{2q,x}(l)$, der Kumulantenmatrix der Ordnung 2q, $C_{2q},x(l)$, von L Sample-Vektoren x(k), 1≤k≤L, mittels eines Schätzglieds der Kreiskumulanten der Ordnung 2q der Beobachtungen,
- Zerlegen der geschätzten Matrix $\hat{C}_{2q,x}(l)$ in spezifische Elemente und Extrahieren einer Schätzung $\hat{U}_{2q,n}(l)$ der Einheitsmatrix $U_{2q,n}(l)$ der bestimmten Vektoren von $C_{2q,x}(l)$,
- Berechnen des geschätzten Pseudospektrums für ein bestimmtes Raster des Raums der Richtungen (θ, φ)

$$\hat{P}_{Music-2q(l)}(\theta, \varphi) \triangleq$$

$$\frac{[a(\theta, \varphi)^{\otimes l} \otimes a(\theta, \varphi)^{*\otimes(q-l)}]^{\dagger} \, \hat{U}_{2q,n}(l) \, \hat{U}_{2q,n}(l)^{\dagger} \, [a(\theta, \varphi)^{\otimes l} \otimes a(\theta, \varphi)^{*\otimes(q-l)}]}{[a(\theta, \varphi)^{\otimes l} \otimes a(\theta, \varphi)^{*\otimes(q-l)}]^{\dagger} \, [a(\theta, \varphi)^{\otimes l} \otimes a(\theta, \varphi)^{*\otimes(q-l)}]}$$

2. Goniometrieverfahren nach Anspruch 1, **dadurch gekennzeichnet, dass** für ein Polarisationsdiversity-Array das geschätzte Pseudospektrum für ein bestimmtes Raster des Raums von Richtungen (θ, φ) und des Raums von Polarisationen p berechnet wird und lokale Minima gesucht werden.

3. Verfahren zur Hochauflösungsgoniometrie einer willkürlichen geradzahligen Ordnung, 2q (q > 2), für ein Array, das N Schmalbandantennen umfasst, die jeweils den Beitrag von P Quellen empfangen, wobei die algebraischen Eigenschaften einer Matrix von Kumulanten der Ordnung 2q, $C_{2q,x}(l)$ genutzt werden, deren Koeffizienten die Kreiskumulanten der Ordnung 2q, Cum $[xi_1(t)....xi_q(t), xi_{q+1}(t)^*..., xi_{2q}(t)^*]$ der an jeder Antenne empfangenen Beobachtungen für um 1 indexierte Kumulantenanordnungen sind, um einen Signalsubraum und einen Rauschsubraum zu definieren, und, für Polarisationsdiversity-Arrays, **dadurch gekennzeichnet, dass** es wenigstens die folgenden Schritte beinhaltet:

- Schätzen von $\hat{C}_{2q,x}(l)$, der Kovarianzmatrix $C_{2q,x}(l)$ von L Sample-Vektoren x(k), 1≤ k ≤ L mittels eines Schätzglieds der Kreiskumulanten der Ordnung 2q der Beobachtungen,
- Zerlegen der geschätzten Matrix $\hat{C}_{2q,x}(l)$ in spezifische Elemente und Extrahieren einer Schätzung $\hat{U}_{2q,n}(l)$ der Einheitsmatrix $U_{2q,n}(l)$ der spezifischen Vektoren von $C_{2q,x}(l)$,
- Berechnen des geschätzten Pseudo-Spektrums

$$\hat{P}_{2q-Music(l)}(\theta, \varphi) =$$

$$\lambda_{min}[(A_{12,q,l}(\theta, \varphi)^{\dagger} \, A_{12,q,l}(\theta, \varphi))^{-1} \, A_{12,q,l}(\theta, \varphi)^{\dagger} \, \hat{U}_{2q,n}(l) \, \hat{U}_{2q,n}(l)^{\dagger} A_{12,q,l}(\theta, \varphi)]$$

für ein bestimmtes Raster des Raums von Richtungen (θ, φ) auf der Basis einer Verarbeitung der Richtungsvektoren $\alpha(\theta, \varphi, p1)$ und $\alpha(\theta, \varphi, p2)$ in den zwei Polarisationen p1 und p2 und Suchen der lokalen Minima, wobei $A_{12}(\theta, \varphi)$ die Matrix (N x 2) ist, die durch $A_{12}(\theta, \varphi) \triangleq [a(\theta, \varphi, p_1), a(\theta, \varphi, p_2)]$ definiert wird, und wobei $\lambda_{min}[X]$ dem tatsächlichen Mindestwert der Matrix X entspricht.

**4.** Verfahren nach Anspruch 3, **dadurch gekennzeichnet, dass** es wenigstens die folgenden Schritte beinhaltet:

• Schätzen von der mit der Quelle i assoziierte Vektor $\alpha_{q,l}(p_i)$ wird jetzt durch den spezifischen Vektor der mit dem minimalen spezifischen Vektor assoziierte Matrix $(A_{12,q,l}(\theta_i, \hat{\phi}_i)^\dagger A_{12,q,l}(\hat{\theta}i, \hat{\phi}_i))^{-1} A_{12,q,l}(\theta_i \cdot \hat{\phi}_i)^\dagger \hat{U}_{2q,n}(l) \hat{U}_{2q,n}(l)^\dagger A_{12,q,l}(\hat{\theta}i, \hat{\phi}i)$ gegeben,

• Zerlegen des Vektors $\hat{\alpha}_{q,l}(p_i)$ in $2^{q-2}$ Subvektoren (4 x 1), $\hat{\alpha}_{q,l,s}(pi)$. $1 \leq s \leq q - 2$, so dass $\hat{\alpha}_{q,l}(p_i) = [\hat{\alpha}_{q,l,s}(p_i)^\mathsf{T} ....., \hat{\alpha}_{q,l,(q-2)}(p_i)^\mathsf{T}]^\mathsf{T}$, und Einordnen der Komponenten jedes Vektors $\hat{\alpha}_{q,l,s}(p_i)$ in eine Matrix (2 x 2) $\hat{\Gamma}_{q,l,s}(p_i)$, so dass: $\hat{\Gamma}_{q,l,x}(p_i)[k, j] = \hat{\alpha}_{q,l,s}(p_i)[2(k-1) + j]$ wobei $\hat{\Gamma}_{q,l,s}(\rho i)[k,j]$ und $\hat{\alpha}_{q,l,s}(p_i)[k]$ das Element [k, j] bzw. die Komponente k der Matrix $\Gamma q,l,s(\rho i)$ bzw. des Vektors $\hat{\alpha}_{q,l,s}(p_i)$ sind, wobei $\alpha(p)$ von den tatsächlichen Koeffizienten der Zerlegung des Einfallsfeldes in insgesamt zwei orthogonal polarisierte Felder gebildet wird,

• gemeinsames Diagonalisieren der Matrizen $\hat{\Delta}_{q,l,s}(p_i)$, $1 \leq s \leq q - 2$, um eine Schätzung, $\hat{\alpha}(p_i)$ des Vektors $\alpha(pi)$ der Polarisationsparameter der Quelle i zu erhalten, geschätzt entsprechend dem spezifischen Vektor, der mit dem bestimmten Maximalwert assoziiert ist, wobei $\hat{\Delta}_{q,l,x}(p_i)$ definiert wird durch:

$$\hat{\Delta}_{q,l,s}(p_i) = \hat{\Gamma}_{q,l,s}(p_i) \, \hat{\Gamma}_{q,l,s}(p_i)^\dagger \quad \text{wenn } q - 1 = 0$$

$$\hat{\Delta}_{q,l,s}(p_i) = \hat{\Gamma}_{q,l,s}(p_i) \, \hat{\Gamma}_{q,l,s}(p_i)^\dagger \quad \text{wenn } q - 1 = 1$$

$$\hat{\Delta}_{q,l,s}(p_i) = \hat{\Gamma}_{q,l,s}(p_i)^* \, \hat{\Gamma}_{q,l,s}(p_i)^\mathsf{T} \quad \text{wenn } q - 1 > 1.$$

**5.** Verfahren zur Hochauflösungsgoniometrie einer willkürlichen geradzahligen Ordnung, 2q (q > 2), für ein Array, das N Schmalbandantennen umfasst, die jeweils den Beitrag von P Quellen empfangen, wobei die algebraischen Eigenschaften einer Matrix von Kumulanten der Ordnung 2q, $C_{2q,x}(l)$ genutzt werden, deren Koeffizienten die Kreiskumulanten der Ordnung 2q, Cum $[x_{i1}(t)..., x_{iq}(t). x_{iq+1}(t)^*, ... x_{i2q}(t)^*]$ der an jeder Antenne empfangenen Beobachtungen für um 1 indexierte Anordnungen von Kumulanten sind, um einen Signalsubraum und einen Rauschsubraum zu definieren, und **dadurch gekennzeichnet, dass** es wenigstens die folgenden Schritte beinhaltet:

• Schätzen von $\hat{C}_{2q,xx}(l)$, der Matrix $C_{2q,xe}(l)$ von Kumulanten der Ordnung 2q der erweiterten Beobachtungen $x_e(t) \overset{\Delta}{=} [x(t)^\mathsf{T}.x(t)^\dagger]^\mathsf{T}$, wobei x(i) der Beobachtungsvektor von L Sample-Vektoren x(k), $1 \leq k \leq L$, ist, mittels eines Schätzglieds der Kumulanten der Ordnung 2q der Beobachtungen,

• Zerlegen der Matrix $\hat{C}_{2q,xe}(l)$ in spezifische Elemente und Extrahieren einer Schätzung $\hat{U}_{2q,en}(l)$ der Matrix $U_{2q,en}(l)$ der spezifischen Vektoren des Rauschraums der Matrix $C_{2q,xe}(l)$,

• Berechnen des geschätzten Pseudospektrums

$$\hat{P}_{Music\text{-}2q\text{-}rec(l)}(\theta, \varphi, \phi) \overset{\Delta}{=}$$

$$\frac{[a_e(\theta, \varphi, \phi)^{\otimes l} \otimes a_e(\theta, \varphi, \phi)^{*\otimes(q-l)}]^\dagger \, \hat{U}_{2q,en}(l) \, \hat{U}_{2q,en}(l)^\dagger \, [a_e(\theta, \varphi, \phi)^{\otimes l} \otimes a_e(\theta, \varphi, \phi)^{*\otimes(q-l)}]}{[a_e(\theta, \varphi, \phi)^{\otimes l} \otimes a_e(\theta, \varphi, \phi)^{*\otimes(q-l)}]^\dagger \, [a_e(\theta, \varphi, \phi)^{\otimes l} \otimes a_e(\theta, \varphi, \phi)^{*\otimes(q-l)}]}$$

für ein bestimmtes Raster des Raums von Richtungen $(\theta, \varphi)$ und des Raums der Phasen $\phi$ und Suchen der lokalen Minima.

**6.** Verfahren nach Anspruch 5, **dadurch gekennzeichnet, dass** es wenigstens die folgenden Schritte beinhaltet:

• Schätzen von $\hat{C}_{2q,xe}(l)$ der Matrix $C_{2q,xe}(l)$ des Satzes von Kumulanten der Ordnung 2q der Beobachtungen von L Sample-Vektors x(k), $1 \leq k \leq L$ mittels eines geeigneten Schätzglieds der Kumulanten der Ordnung 2q der Beobachtungen,

• Zerlegen der Matrix $\hat{C}_{2q,xe}(l)$ in spezifische Elemente und Extrahieren einer Schätzung $\hat{U}_{2q,en}(l)$ der Matrix $U_{2q,en}(l)$ der spezifischen Vektoren des Rauschraums der Matrix $C_{2q,xe}(l)$

• Berechnen des geschätzten Pseudospektrums

$$\hat{P}_{Music\text{-}2q\text{-}rec(l)}(\theta, \varphi) =$$

$$\lambda_{min}\{(\bar{A}_{e,q,l}(\theta, \varphi)^{\dagger} \bar{A}_{e,q,l}(\theta, \varphi))^{-1} \bar{A}_{e,q,l}(\theta, \varphi)^{\dagger} \hat{U}_{2q,en}(l) \hat{U}_{2q,en}(l)^{\dagger} \bar{A}_{e,q,l}(\theta, \varphi)\}$$

wobei $\bar{A}_{e,q,l}(\theta,\varphi)$ die Matrix $(2^q N^q \, x 2^q)$ ist, definiert durch

$$\tilde{A}_{e,q,l}(\theta, \varphi) \overset{\Delta}{=} [\tilde{A}_e(\theta, \varphi)^{\otimes l} \otimes \tilde{A}_e(\theta, \varphi)^{*\otimes(q-l)}]$$

wobei $\tilde{A}_e(\theta,\varphi)$ die Matrix $(2N \, x \, 2)$ ist, definiert durch

$$\tilde{A}_e(\theta, \varphi) \overset{\Delta}{=} \begin{pmatrix} \alpha(\theta, \varphi) & 0 \\ 0 & \alpha(\theta, \varphi)^* \end{pmatrix}$$

wobei 0 der Null-Vektor der Dimension $(N \, x \, 1)$ und $\alpha(\theta, \varphi)$ der Richtungsvektor assozüert mit der Richtung $(\theta, \varphi)$ für ein bestimmtes Raster des Ankunftsrichtungsraums ist,
• Schätzen des Vektors $\beta_{q,l}(\phi i)$ assoziiert mit der Quelle i, gegeben durch den spezifischen Vektor der mit dem spezifischen Mindestwert assoziierten Matrix

$$(\tilde{A}_{e,q,l}(\hat{\theta}_i, \hat{\phi}_i)^{\dagger} \tilde{A}_{e,q,l}(\hat{\theta}_i, \hat{\phi}_i))^{-1} \tilde{A}_{e,q,l}(\hat{\theta}_i, \hat{\phi}_i)^{\dagger} \hat{U}_{2q,en}(l) \hat{U}_{2q,en}(l)^{\dagger} \tilde{A}_{e,q,l}(\hat{\theta}_i, \hat{\phi}_i)\;.$$

7.  Verfahren nach Anspruch 6, **dadurch gekennzeichnet, dass** es wenigstens die folgenden Schritte beinhaltet:

• Schätzen von $\hat{\beta}_{q,l}(\phi_i)$ des Vektors $\beta_{q,l}(\phi_i)$, der mit der Quelle i assoziiert ist, durch den spezifischen Vektor der Matrix

$$(\tilde{A}_{e,q,l}(\hat{\theta}_i, \hat{\phi}_i)^{\dagger} \tilde{A}_{e,q,l}(\hat{\theta}_i, \hat{\phi}_i))^{-1} \tilde{A}_{e,q,l}(\hat{\theta}_i, \hat{\phi}_i)^{\dagger} \hat{U}_{2q,en}(l) \hat{U}_{2q,en}(l)^{\dagger} \tilde{A}_{e,q,l}(\hat{\theta}_i, \hat{\phi}_i)$$

assoziiert mit dem spezifischen Mindestwert, wobei $(\hat{\theta}_i, \hat{\phi}_i)$ die geschätzte Richtung der Quelle i ist,
• Zerlegen des Vektor $\tilde{\beta}_{q,l}(\phi_i)$ in $2^{q-2}$ Subvektoren $(4 \, x \, 1)$. $\beta_{q,l,x}(\phi_i), 1 \le s \le q - 2$, so dass $\hat{\beta}_{q,l}(\phi_i) = [\hat{\beta}_{q,l,l}(\phi_i)^{T}, ....., \beta_{q,l,(q-2)}(\phi_i)^{T}]^{T}$ und Einordnen der Komponenten jedes Vektors $\beta_{q,l,s}(\phi_i)$ in eine Matrix $(2 \, x \, 2) \hat{\Gamma}_{q,l,s}(\phi_i)$, so dass:

$\hat{\Gamma}_{q,l,s}(\phi_i)[k,j] = \hat{\beta}_{q,l,s}(\phi_i)(2k - 1) + j]$ wobei $\Gamma_{q,l,s}(\phi_i) [k, j]$ und $\beta_{q,l,s}(\phi_i)[k]$ das $\hat{\Gamma}_{q,l,s}(\phi_i) [k,j] = \beta_{q,l,x}(\phi_i)[2(k - 1) + j]$ wobei $\hat{\Gamma}_{q,l}s(\phi_i) [k,j]$ und $\beta_{q,l,s}(\phi_i)[k]$ das Element $[k, j]$ und die Komponente k respektiv der Matrix $\hat{\Gamma}_{q,l,x}(\phi_i)$ und des Vektors $\beta_{q,l,s}(\phi_i)$, sind,

• gemeinsames Diagonalisieren der Matrizen $\hat{\Delta}_{q,l,s}(\phi_i)$, $1 \le s \le q-2$ zum Erhalten einer Schätzung $\hat{\beta}(\phi_i)$ des Vektors $\beta(\phi_i) \overset{\Delta}{=} [e^{j\phi_i}, e^{-j\phi_i}]^{T}$ der Phasenparameter der Quelle i, geschätzt entsprechend dem spezifischen Vektor, der mit dem spezifischen Maximalwert assoziiert ist, wobei $\hat{\Delta}_{q,l,x}(\phi_i)$ definiert ist durch:

$$\hat{\Delta}_{q,l,s}(\phi_i) = \hat{\Gamma}_{q,l,s}(\phi_i) \hat{\Gamma}_{q,l,s}(\phi_i)^{\dagger} \quad \text{wenn } q - 1 = 0$$

$$\hat{\Delta}_{q,l,s}(\phi_i) = \hat{\Gamma}_{q,l,s}(\phi_i) \hat{\Gamma}_{q,l,s}(\phi_i)^{\dagger} \quad \text{wenn } q - 1 = 1$$

$$\hat{\Delta}_{q,l,s}(\phi_i) = \hat{\Gamma}_{q,l,s}(\phi_i)^* \, \hat{\Gamma}_{q,l,s}(\phi_i)^{\mathrm{T}} \quad \text{wenn } q-1 > 1.$$

8. Verfahren nach einem der Ansprüche 1 bis 6, **dadurch gekennzeichnet, dass** der Zerlegungsschritt einen Schritt des Schätzens einer Reihe der Matrix $\hat{U}_{2q.en}(l)$ beinhaltet.

9. Vorrichtung zur Hochauflösungsgoniometrie einer willkürlichen geradzahligen Ordnung, 2q wobei (q > 2), für ein Array, das N Schmalbandantennen umfasst, die jeweils den Beitrag von P Quellen empfangen, **dadurch gekennzeichnet, dass** sie einen Prozessor zum Ausführen der Schritte des Verfahrens nach einem der Ansprüche 1 bis 8 umfasst.

FIG.1

□ : *Réseau Virtuel*     ⊗ : *Réseau Réel*

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. BIENVENU ; L. KOPP.** optimality of high resolution array processing using the eigensystem approach. *IEEE Trans. Acou. Speech and Sign. Proc.,* Octobre 1983, vol. 31 (5), 1235-1247
- **J.P. BURG.** The relationship between maximum entropy spectra and maximum likelihood spectra. *Geophysics,* Avril 1972, vol. 37 (2), 375-376
- **J. CAPON.** High resolution frequency-wavenumber spectrum analysis. *Proc. IEEE,* Février 1969, vol. 57 (8), 1408-1418
- **P. CHEVALIER ; A. FERREOL.** On the virtual array concept for the fourth-order direction finding problem. *IEEE Trans. Signal Processing,* Septembre 1999, vol. 47 (9), 2592-2595
- **R.T. COMPTON, JR .** Adaptive Antennas - Concepts and Performance. Prentice Hall, 1988, 07632
- **M.C. DOGAN ; J.M. MENDEL.** Applications of cumulants to array processing - Part I : Aperture extension and array calibration. *IEEE Trans. Signal Processing,* Mai 1995, vol. 43 (5), 1200-1216
- **A. FERREOL ; P. CHEVALIER.** On the behavior of current second and higher order blind source separation methods for cyclostationary sources. *IEEE Trans. Signal Processing,* Juin 2000, vol. 48 (6), 1712-1725
- **Errata.** *IEEE TRANS. SIGNAL PROCESSING,* Avril 2002, vol. 50 (4), 990
- **A. FERREOL ; P. CHEVALIER ; L. ALBERA.** Higher order blind separation of non zero-mean cyclostationary sources. *Proc. EUSIPCO 02,* Septembre 2002, 103-106

- **A. FERREOL ; P. CHEVALIER ; L. ALBERA.** Second order blind separation of first and second order cyclostationary sources - Application to AM, FSK, CPFSK and Deterministic sources. *IEEE Trans. Signal Processing,* Avril 2004, vol. 52 (4), 845-861
- **B. FRIEDLANDER.** A sensitivity analysis of the MUSIC algorithm. *IEEE Trans. Acou. Speech. and Signal Processing,* Octobre 1990, vol. 38 (10), 1740-1751
- Tensor methods in Statistics. **P. Mc CULLAGH.** Monographs on Statistics and applied Probability. Chapman and Hall, 1987
- **A. PAULRAJ ; T. KAILATH.** Eigenstructure methods for direction of arrival estimation in the présence of unknown noise field. *IEEE Trans. Acou. Speech and Sign. Proc.,* Février 1996, vol. 34 (1), 13-20
- **B. PORAT ; B. FRIEDLANDER.** Direction finding algorithms based on higher order statistics. *IEEE Trans. Signal Processing,* Septembre 1991, vol. 39 (9), 2016-2024
- **R.O. SCHMIDT.** Multiple emitter location and signal parameter estimation. *IEEE Trans. Ant. Prop.,* Mars 1986, vol. 34 (3), 276-280
- **A.L. SWINDLEHURST ; T. KAILATH.** A performance analysis of subspaced-based methods in the presence of model errors, Part I : The MUSIC algorithm. *IEEE Trans. Signal Processing,* Juillet 1992, vol. 40 (3), 1758-1773